# EUROPEAN PATENT APPLICATION

(11) **EP 4 693 006 A1**
(43) Date of publication of application: **11.02.2026**
(21) Application number: 24785228.8
(22) Date of filing: 03.04.2024
(51) Int. Cl.: G06F 3/04817, G06F 3/04842, G06F 3/04845, G06F 9/451, G06F 9/448

(54) **ELECTRONIC DEVICE AND OPERATING METHOD THEREOF**

(30) Priority: 03.04.2023 KR 20230043801; 11.07.2023 KR 20230090096; 07.12.2023 KR 20230177074
(71) Applicant: Samsung Electronics Co., Ltd., Suwon-si, Gyeonggi-do 16677 (KR)
(72) Inventor: HAN, Jiyoung, Suwon-si Gyeonggi-do 16677 (KR); KIM, Munhwi, Suwon-si Gyeonggi-do 16677 (KR); KIM, Hyunjung, Suwon-si Gyeonggi-do 16677 (KR); NAM, Seungwook, Suwon-si Gyeonggi-do 16677 (KR); CHANG, Ilku, Suwon-si Gyeonggi-do 16677 (KR); JEON, Wooram, Suwon-si Gyeonggi-do 16677 (KR); CHUNG, Jinkyo, Suwon-si Gyeonggi-do 16677 (KR); HAN, Heelim, Suwon-si Gyeonggi-do 16677 (KR); HONG, Kyungwha, Suwon-si Gyeonggi-do 16677 (KR)
(74) Representative: Gulde & Partner
(86) International application number: PCT/KR2024/004358
(87) International publication number: WO 2024/210527

(57) **Abstract**

An electronic device according to an embodiment may comprise: a display; a memory storing instructions; and at least one processor. The instructions may cause the electronic device to, when executed by the at least one processor: obtain an input corresponding to a designated object arranged in a home screen; display, on a display, a designated folder page in which at least one first widget is arranged, on the basis of the input corresponding to the designated object; identify an attribute of the designated folder page on the basis of the at least one first widget or at least one icon included in the designated folder page; and change at least one of display or arrangement of the at least one first widget on the basis of the attribute of the designated folder page, environment data of the electronic device, or activity data of the user.

## Description

### [Technical Field]

The disclosure relates to an electronic device displaying a designated folder page according to an embodiment on a display and a method for operating the same.

### [Background Art]

With advancements in the performance and network technology of communication terminals, users may access a variety of services from different service providers through their communication terminal devices. However, with the increasing diversity of service providers and the types of services they offer, users may encounter difficulties in effectively utilizing the services they need. Therefore, there is a need for a service-providing technology that may effectively deliver the required services to users.

Furthermore, there is a need for a service-providing technology that may enable users to efficiently execute operations related to those performed on communication terminal devices through a simple user interface.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

An electronic device according to an embodiment of the disclosure may comprise a display, memory storing instructions, and at least one processor. The instructions may, when executed by the at least one processor, cause the electronic device to obtain an input corresponding to a designated object disposed on a home screen. The instructions may cause the electronic device to display, on the display, a designated folder page in which at least one first widget is disposed, based on the input corresponding to the designated object. The designated folder page may be displayed above the home screen displayed on the display. The instructions may cause the electronic device to identify a property of the designated folder page based on the at least one first widget or at least one icon included in the designated folder page. The instructions may cause the electronic device to change at least one of display or arrangement of the at least one first widget based on the property of the designated folder page, environment data of the electronic device, or user activity data.

A method for operating an electronic device according to an embodiment of the disclosure may comprise obtaining an input corresponding to a designated object disposed on a home screen. The method for operating the electronic device according to an embodiment may comprise displaying, on a display, a designated folder page in which at least one first widget is disposed, based on the input corresponding to the designated object. The designated folder page may be displayed above the home screen displayed on the display. The method for operating the electronic device according to an embodiment may comprise obtaining an input corresponding to the at least one first widget included in the designated folder page. The method for operating the electronic device according to an embodiment may comprise identifying a property of the designated folder page based on the at least one first widget or at least one icon included in the designated folder page. The method for operating the electronic device according to an embodiment may comprise changing at least one of display or arrangement of the at least one first widget based on the property of the designated folder page, environment data of the electronic device, or user activity data.

A non-transitory, computer-readable storage medium storing one or more programs according to an embodiment of the disclosure may comprise obtaining an input corresponding to a designated object disposed on a home screen based on execution of an application. The storage medium according to an embodiment may comprise displaying, on a display, a designated folder page in which at least one first widget is disposed, based on the input corresponding to the designated object. The designated folder page may be displayed above the home screen displayed on the display. The storage medium according to an embodiment may comprise obtaining an input corresponding to the at least one first widget included in the designated folder page. The storage medium according to an embodiment may comprise identifying a property of the designated folder page based on the at least one first widget or at least one icon included in the designated folder page. The storage medium according to an embodiment may comprise changing at least one of display or arrangement of the at least one first widget based on the property of the designated folder page, environment data of the electronic device, or user activity data.

An electronic device according to an embodiment of the disclosure may comprise a display, memory storing instructions, and at least one processor. The instructions may cause the electronic device to obtain a resource received in relation to a designated folder page. The resource may include text data or image data. The instructions may cause the electronic device to identify a recommended application or recommended task corresponding to the designated folder page based on the obtained resource. The instructions may cause the electronic device to dispose an object corresponding to the identified recommended application or recommended task in a first area of the designated folder page. The instructions may cause the electronic device to display, on the display, the designated folder page based on an input corresponding to a designated object disposed on a home screen. The designated folder page may be displayed above the home screen or content screen displayed on the display. The instructions may cause the electronic device to object an input corresponding to at least one widget or at least one icon included in the designated folder page or the home screen. The instructions may cause the electronic device to dispose the at least one widget or the at least one icon at a specific position or in a specific size in a second area of the designated folder page based on the obtained input corresponding to the at least one widget or the at least one icon.

In a storage medium storing computer-readable instructions according to an embodiment of the disclosure, the instructions may, when executed by at least one processor of an electronic device, cause the electronic device to obtain an input corresponding to a designated object disposed on a home screen.

The instructions may cause the electronic device to display, on the display, a designated folder page in which at least one first widget is disposed, based on the input corresponding to the designated object. The designated folder page may be disposed above the home screen displayed on the display.

The instructions may cause the electronic device to identify a property of the designated folder page based on the at least one first widget or at least one icon included in the designated folder page.

The instructions may cause the electronic device to change at least one of display or arrangement of the at least one first widget based on the property of the designated folder page, environment data of the electronic device, or user activity data.

### [Brief Description of Drawings]

FIG. 1 is a block diagram illustrating an electronic device in a network environment according to an embodiment of the disclosure;
FIG. 2 is a block diagram illustrating an electronic device according to an embodiment of the disclosure;
FIG. 3A illustrates a display for displaying a designated folder page in which at least one first widget is disposed according to an embodiment of the disclosure;
FIGS. 3B, 3C, 3D, 3E, 3F, and 3G illustrate examples of a designated object according to an embodiment of the disclosure;
FIG. 4 illustrates an example of an operation of generating a designated folder page according to an embodiment of the disclosure;
FIG. 5 illustrates an example of an operation of displaying a notification corresponding to a widget and moving or copying to a designated folder page according to an embodiment of the disclosure;
FIG. 6A illustrates an example of an operation of swapping a home screen or a page of the home screen to a designated folder page according to an embodiment of the disclosure;
FIG. 6B illustrates an example of an operation of swapping a portion of a home screen or a page of the home screen to a designated folder page according to an embodiment of the disclosure;
FIG. 7 illustrates an example of an operation of swapping a designated folder page to a home screen or a page of the home screen according to an embodiment of the disclosure;
FIGS. 8A and 8B illustrate examples of a designated folder page corresponding to a designated object according to an embodiment of the disclosure;
FIGS. 9A, 9B, 9C, 9D, and 9E illustrate an example of changing the arrangement of widgets disposed on a designated folder page according to an embodiment of the disclosure;
FIGS. 10A, 10B, 10C, 10D, 10E, and 10F illustrate an example of changing the display of a widget disposed on a folder page according to an embodiment of the disclosure;
FIG. 11 illustrates an example of a page icon disposed on a designated folder page according to an embodiment of the disclosure;
FIG. 12 illustrates a designated folder page displayed corresponding to an input corresponding to a floating object according to an embodiment of the disclosure;
FIGS. 13A, 13B, 13C, and 13D illustrate examples of a recommended application or a recommended task according to an embodiment of the disclosure;
FIG. 14 illustrates a designated folder page according to an embodiment of the disclosure;
FIG. 15 illustrates a feed of a designated folder page according to an embodiment of the disclosure in detail;
FIGS. 16A, 16B, and 16C illustrate examples of a designated folder page according to an embodiment of the disclosure;
FIG. 17 is a flowchart illustrating a method for operating an electronic device according to an embodiment of the disclosure;
FIG. 18 is a flowchart illustrating a method for operating an electronic device according to an embodiment of the disclosure;
FIGS. 19A and 19B illustrate designated folder pages according to an embodiment of the disclosure;
FIGS. 20A, 20B, and 20C illustrate examples of an operation of generating a designated folder page according to an embodiment of the disclosure;
FIGS. 21A, 21B, and 21C illustrate examples of an operation of updating a designated folder page according to an embodiment of the disclosure;
FIG. 22 illustrates an example of an operation of displaying a designated folder page according to an embodiment of the disclosure;
FIG. 23 illustrates an example of an operation of swapping a page of a home screen to a designated folder page according to an embodiment of the disclosure;
FIG. 24 illustrates an example of an operation of displaying a notification according to an embodiment of the disclosure;
FIGS. 25A, 25B, 25C, 25D, and 25E illustrate examples of an operation of displaying an object corresponding to a notification according to an embodiment of the disclosure;
FIGS. 26A, 26B, 26C, 26D, and 26E illustrate examples of an operation of displaying an object corresponding to a notification according to an embodiment of the disclosure;
FIGS. 27A, 27B, 27C, 27D, and 27E illustrate examples of an operation of displaying an object corresponding to at least one recommended application according to an embodiment of the disclosure;
FIGS. 28A, 28B, and 28C illustrate examples of an operation of displaying an icon corresponding to at least one recommended application according to an embodiment of the disclosure;
FIG. 29 illustrates an example of an operation of displaying a folder page corresponding to at least one recommended application according to an embodiment of the disclosure;
FIGS. 30A and 30B illustrate examples of an operation of displaying an object corresponding to a folder page corresponding to at least one recommended application according to an embodiment of the disclosure; and
FIG. 31 illustrates an example of an operation of displaying an object corresponding to a notification according to an embodiment of the disclosure.

### [Mode for Carrying out the Invention]

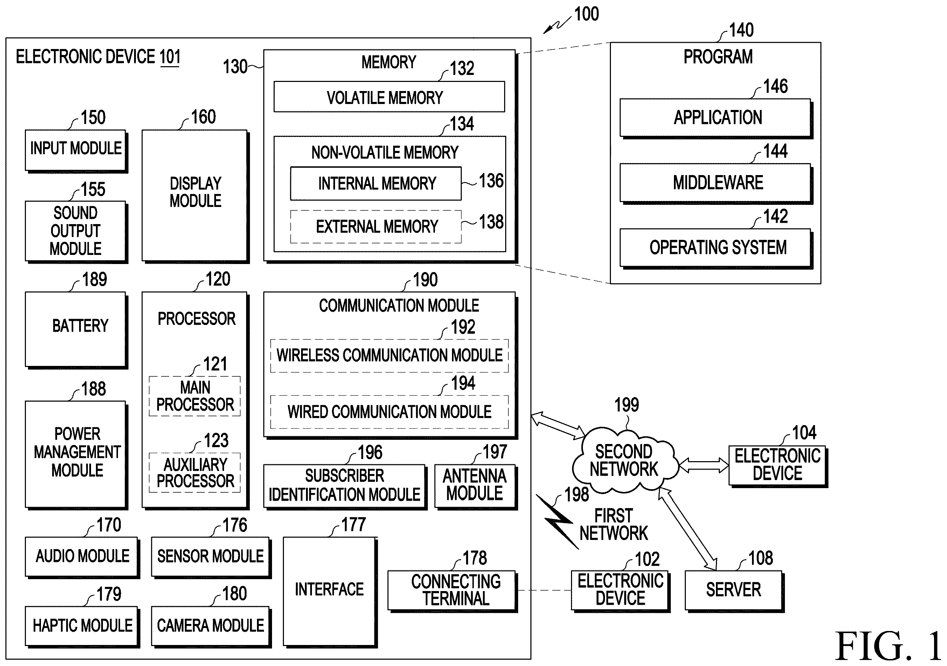

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

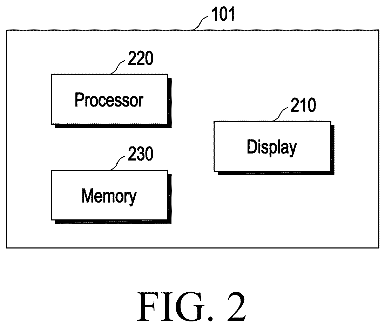

FIG. 2 is a block diagram illustrating an electronic device 101 according to an embodiment of the disclosure.

Referring to FIG. 2, the electronic device 101 according to an embodiment may include a display 210, a processor 220 (e.g., the processor 120 of FIG. 1) and/or memory 230, e.g., the memory 130 of FIG. 1). In an embodiment, the electronic device 101 may include only some of the components, or may further include additional components illustrated in FIG. 1.

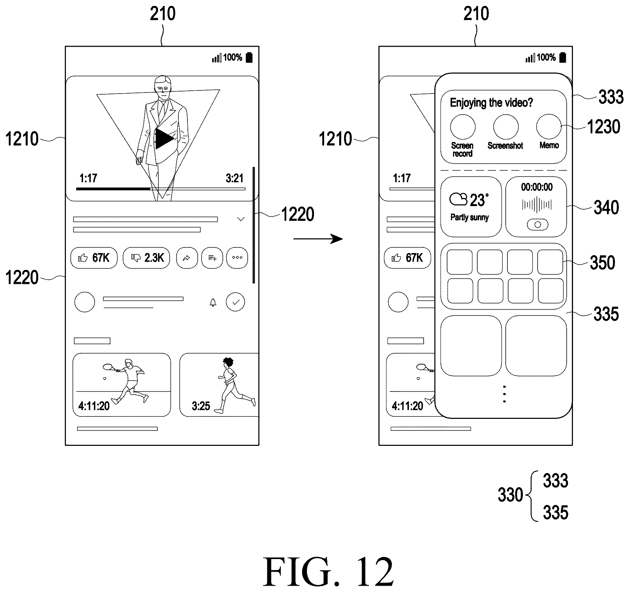

The display 210 according to an embodiment may display a screen including visual information to the user. In an embodiment, the display 210 may display a home screen 310 or a content screen (e.g., the content screen 1210 of FIG. 12) corresponding to an application or task to be executed.

The processor 220 according to an embodiment may control at least one other component (e.g., a hardware or software component) of the electronic device 101. In an embodiment, the processor 220 may perform various data processing or operations, and as at least part of the data processing or operations, the processor 810 may store a command or data received from another component in the memory 230, may process the command or data stored in the memory 230, and may store result data in the memory 230.

The memory 230 according to an embodiment may store instructions (or commands) executable in the processor 220.

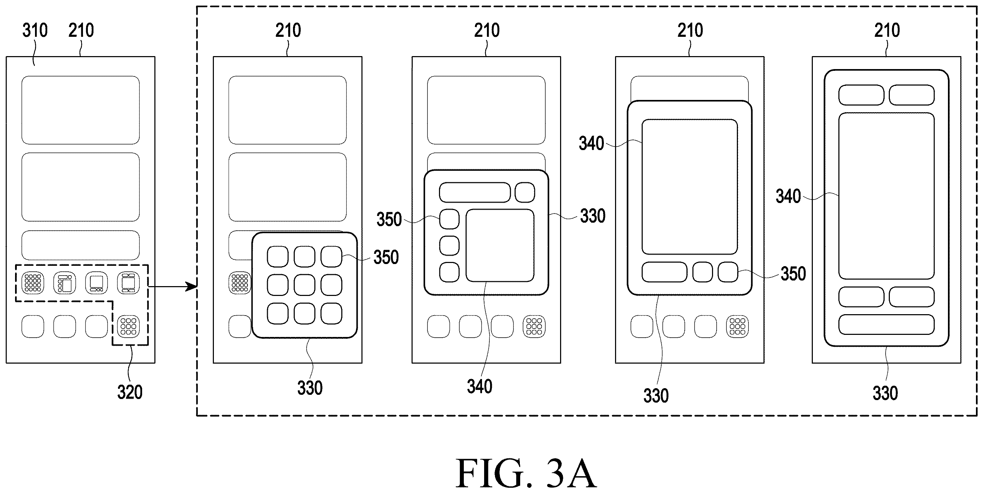

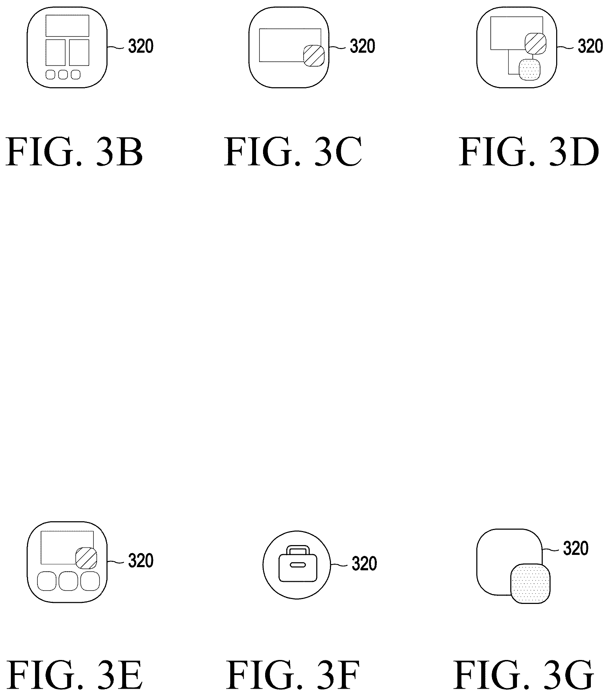

FIG. 3A illustrates a display 210 for displaying a designated folder page 330 in which at least one first widget 340 is disposed according to an embodiment of the disclosure. FIGS. 3B to 3G illustrate an example of a designated object 320 according to an embodiment of the disclosure.

Referring to FIGS. 3A to 3G, the electronic device 101 according to an embodiment may display a home screen 310. For example, the electronic device 101 according to an embodiment may display a designated home screen 310 when the screen of the display 210 is changed from an off state to an on state or when an application or task is not executed in the foreground.

For example, as illustrated in FIG. 3A, at least one page may be set on the home screen 310, and at least one designated object 320 may be disposed on each page. For example, at least one designated object 320 may include an icon 350 or a widget 340. For example, the icon 350 may correspond to a short-cut for a specific application or a specific task. For example, the icon 350 may correspond to a folder including a plurality of icons or a plurality of widgets.

The electronic device 101 according to an embodiment may generate a designated object 320 and a designated folder page 330 corresponding to the designated object 320 on the home screen 310 or at least one page of the home screen 310 based on the user's input.

The electronic device 101 according to an embodiment may display the designated folder page 330 on the display 210 based on an input corresponding to the designated object 320 disposed on the home screen 310 or at least one page included in the home screen 310. In an embodiment, the electronic device 101 may receive the user's input (e.g., a touch input) corresponding to the designated object 320 disposed on the home screen 310 or at least one page included in the home screen 310, and display the designated folder page 330 corresponding to the designated object on the display based on the received input.

The electronic device 101 according to an embodiment may display the designated folder page 330 on the display 210 above the home screen 310. In an embodiment, the designated folder page 330 may be displayed on the display 210 in a designated size. In an embodiment, the size of the designated folder page 330 may be automatically changed by the size and arrangement of the widgets 340 or icons 350 to be disposed, or may be manually changed based on the user's input.

In the electronic device 101 according to an embodiment, at least one first widget 340 may be disposed at a specific position and/or in a specific size on the designated folder page 330.

In an embodiment, at least one icon 350 may be disposed on the designated folder page 330. In an embodiment, at least one icon 350 disposed on the designated folder page 330 may have a designated size.

The electronic device 101 according to an embodiment may obtain the user's input corresponding to at least one first widget 340 included in the designated folder page 330. For example, the electronic device 101 may obtain a designated type of touch input (e.g., long press, drag, or pinch zoom-in/out) corresponding to at least one first widget 340.

The electronic device 101 according to an embodiment may dispose at least one first widget 340 at a specific position or in a specific size on the designated folder page 330 based on the obtained input. In an embodiment, the electronic device 101 may change the position of at least one first widget 340 based on the user's input to at least one first widget 340 disposed on the designated folder page 330. In an embodiment, the electronic device 101 may change the size of the at least one first widget 340 based on the user's input to the at least one first widget 340 disposed on the designated folder page 330.

In an embodiment, the electronic device 101 may change the position of the at least one icon 350 based on the user's input to the at least one icon 350 disposed on the designated folder page 330.

The electronic device 101 according to an embodiment may store data related to at least one first widget 340 included in the designated folder page 330 corresponding to the designated object 320. In an embodiment, the electronic device may store data regarding the size and/or arrangement of at least one first widget 340 and/or at least one icon 350 in the designated folder page 330.

In an embodiment, when obtaining the user's input corresponding to the designated object 320 later, the electronic device 101 may display the designated folder page 330 corresponding to data related to at least one first widget 340 stored corresponding to the designated object 320.

In an embodiment, as illustrated in FIGS. 3B to 3G, the electronic device 101 may display the designated object 320 corresponding to the designated folder page 330 in various forms.

In an embodiment, as illustrated in FIG. 3B, the electronic device 101 may display the designated object 320 as an image of a thumbnail of the designated folder page 330.

In an embodiment, as illustrated in FIG. 3C, the electronic device 101 may display the designated object 320 as an image of one of the at least one first widget 340 included in the designated folder page 330. In an embodiment, the electronic device 101 may further display an icon of an application corresponding to any one selected from among the at least one first widget 340 on the object 320 designated to overlap an image of any one of the at least one first widget 340.

In an embodiment, the electronic device 101 may select an image of a widget having the largest size from among the at least one first widget 340 included in the designated folder page 330 as a widget to display the designated object 320. In an embodiment, when there are a plurality of widgets having the largest size among the at least one first widget 340, the first one among the plurality of widgets having the same size may be selected.

In an embodiment, as illustrated in FIG. 3D, the electronic device 101 may display the designated object 320 as two images among the at least one first widget 340 included in the designated folder page 330. In an embodiment, the electronic device 101 may further display icons of applications respectively corresponding to two selected from among the at least one first widget 340 on the designated object 320 to overlap images of two of the at least one first widget 340.

In an embodiment, as illustrated in FIG. 3E, the electronic device 101 may select one of the at least one first widget 340 included in the designated folder page 330, for the designated object 320, and some of icons of at least one application included in the designated folder page 330 for the designated object 320 and display the same on the designated object 320. For example, the electronic device 101 may select up to three from among the icons of the at least one application included in the designated folder page 330 in order from the top right end for the designated object 320 and display the same on the designated object 320.

In an embodiment, as illustrated in FIG. 3F, the electronic device 101 may display the designated object 320 as a designated icon corresponding to the designated folder page 330.

In an embodiment, the electronic device 101 may set a designated icon corresponding to the designated folder page 330 based on the property of the designated folder page 330. In an embodiment, the electronic device 101 may identify the property of the designated folder page 330 based on at least one first widget 340 included in the designated folder page 330 or at least one icon included in the designated folder page 330. For example, the designated icon may be set, such as a task page icon or a shopping page icon.

For example, the designated icon may be designated as an image selected by the user corresponding to the designated folder page 320. For example, the designated icon may be automatically designated based on the common characteristics (e.g., categories) of at least one first widget or at least one icon disposed on the designated folder page 330.

In an embodiment, as illustrated in FIG. 3G, the electronic device 101 may display the designated object 320 as an image in which a representative widget among the at least one first widget 330 included in the designated folder page 330 and a designated icon corresponding to the designated folder page 330 are combined. For example, the designated object 320 may be displayed as an image in which the representative widget among the at least one first widget 340 and the icon designated corresponding to the designated folder page 330 at least partially overlap each other.

In an embodiment, the electronic device 101 may display the designated object 320 as an image that dynamically changes. For example, the electronic device 101 may display the designated object 320 while sequentially changing over time as in the above-described example.

In an embodiment, as the arrangement of widgets included in the designated folder page 330 is changed, the electronic device 101 may change and display the designated object 320. For example, based on the update of the designated folder page 330, the designated object 320 may be changed and displayed.

In an embodiment, the electronic device 101 may change the arrangement or display of at least one first widget 340 or at least one icon 350 disposed on the designated folder page 330 based on the environment data of the electronic device 101 or the user's activity data, and accordingly, change and display the designated object 320.

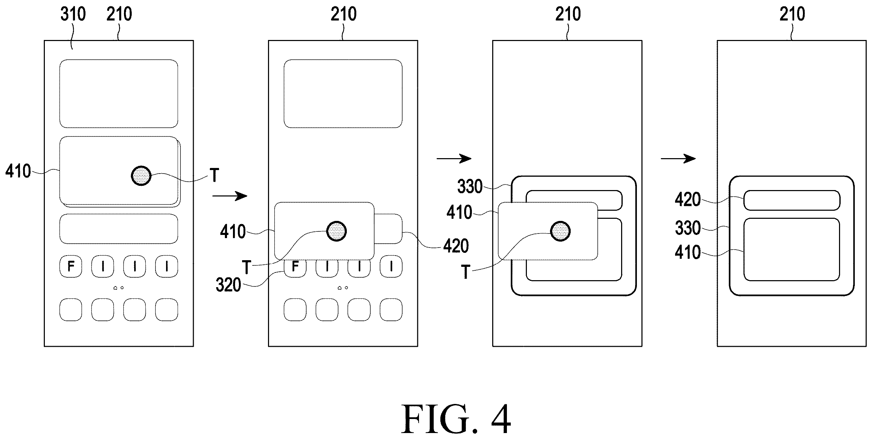

FIG. 4 illustrates an example of an operation of generating a designated folder page 330 according to an embodiment of the disclosure.

Referring to FIG. 4, the electronic device 101 according to an embodiment may generate a designated folder page 330 including at least one second widget 410 based on an input corresponding to at least one second widget 410 disposed on the home screen 310 or a page of the home screen 310 displayed on the display 210 based on the user's input T.

In an embodiment, the electronic device 101 may obtain the user's touch input (T, e.g., hold & drag) corresponding to at least one second widget 410 disposed on the home screen 310 or the page of the home screen 310. In an embodiment, the electronic device 101 may move or copy at least one second widget 410 corresponding to the user's touch input T.

In an embodiment, the electronic device 101 may obtain the user's touch input T to the designated object 320 for at least one second widget 410 disposed on the home screen 310 or the page of the home screen 310. In an embodiment, the electronic device 101 may obtain a user's touch input T corresponding to the third widget 420 disposed on the home screen 310 or the page of the home screen 310 for the at least one second widget 410 disposed on the home screen 310 or the page of the home screen 310. For example, the user's touch input T may be a hold&drag for the at least one second widget 410 and a release input to the third widget 420 disposed on the home screen 310 or the page of the home screen 310.

In an embodiment, the electronic device 101 may generate the designated folder page 330 including at least one second widget 410 and the third widget 420 in response to the user's touch input T overlapping the third widget 420 for the at least one second widget 410. In an embodiment, the electronic device 101 may dispose at least one second widget 410 at a specific position in the designated folder page 330 based on the user's touch input T to the designated folder page 330 for the at least one second widget 410.

In an embodiment, the electronic device 101 may move or copy the at least one second widget 410 to a specific position in the designated folder page 330 in response to the user's touch input T (e.g., hold & drag and release) to the designated folder page 330 for the at least one second widget 410.

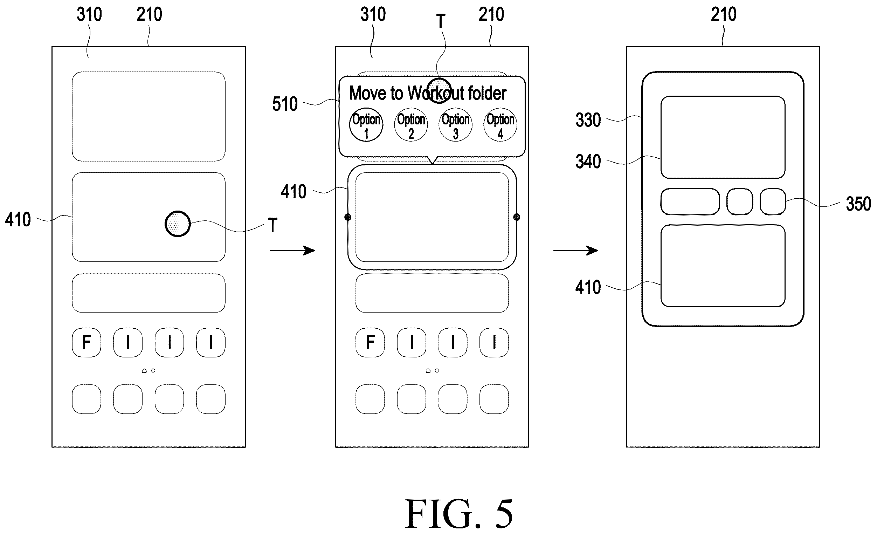

FIG. 5 illustrates an example of an operation of displaying a notification 510 corresponding to a second widget 410 and moving or copying to a designated folder page 330 according to an embodiment of the disclosure.

Referring to FIG. 5, the electronic device 101 according to an embodiment may display a notification 510 related to at least one folder page 330 including the designated folder page 330 on the display 210 based on an input corresponding to at least one second widget 410 disposed on the home screen 310 or the page of the home screen 310.

In an embodiment, when receiving the user's touch input T (e.g., hold) corresponding to the at least one second widget 410 disposed on the home screen 310 or the page of the home screen 310, the electronic device 101 may display the notification 510 related to the at least one folder page 330 around the at least one second widget 410. In an embodiment, the electronic device 101 may include at least one option related to the moving or copying of at least one second widget 410 in the notification 510.

In an embodiment, the notification 510 may include at least one selection button corresponding to the at least one folder page 330 identified based on the property of the at least one second widget 410. In an embodiment, the electronic device 101 may identify at least one folder page 330 having a recommendable or highly similar property based on the property of the at least one second widget 410. For example, the category of the application corresponding to the at least one second widget 410 may be included in the property of the at least one second widget 410.

In an embodiment, the electronic device 101 may identify the most common category as a category corresponding to the at least one folder page 330 based on the category of the application corresponding to the widget 340 or the icon 350 included in each of the at least one folder page 330. For example, there may be a plurality of categories for the application corresponding to the widget 340 or icon 350, and the electronic device 101 may identify common categories among the plurality of categories for the application corresponding to the widget 340 or icon 350 included in at least one folder page 330 and identify the most common category.

For example, the electronic device 101 may identify the category of the application corresponding to the at least one second widget 340 and identify the at least one folder page 330 corresponding to the identified application category based on the category of the at least one folder page 330.

In an embodiment, the electronic device 101 may receive the user's input T to the at least one selection button (e.g., workout folder) corresponding to the at least one folder page 330 included in the notification 510. In an embodiment, the electronic device 101 may move or copy the at least one second widget 410 to the designated folder page 330 corresponding to the selection button based on the user's input T to the at least one selection button.

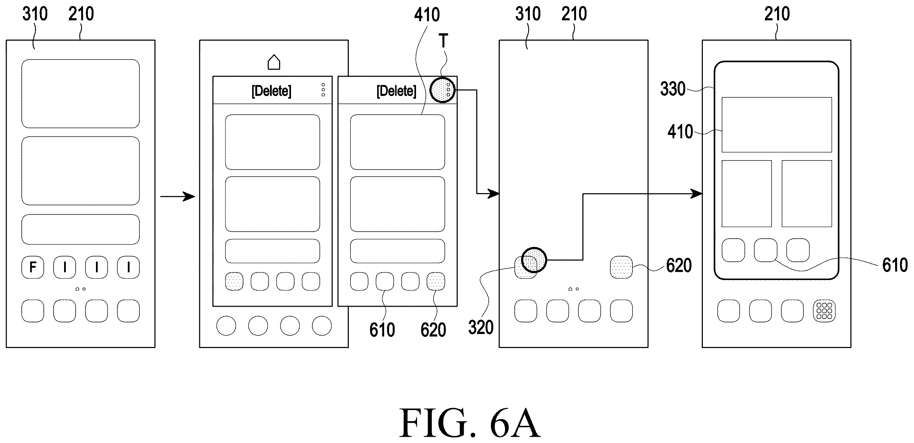

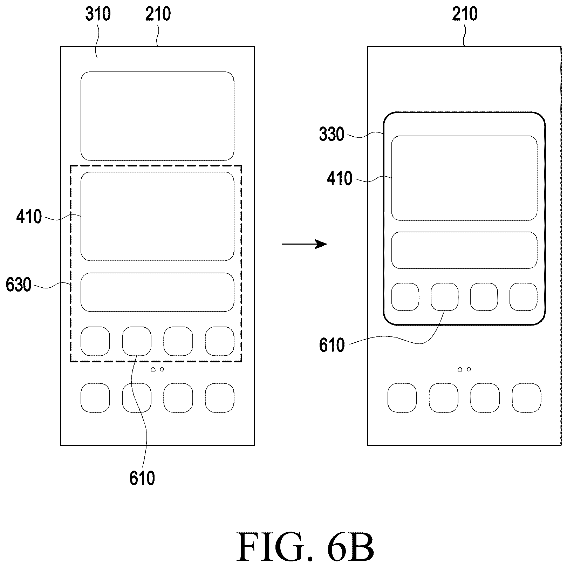

FIG. 6A illustrates an example of an operation of swapping a home screen 210 or a page of the home screen 210 to a designated folder page 330 according to an embodiment of the disclosure. FIG. 6B illustrates an example of an operation of swapping a portion 630 of a home screen 210 or a page of the home screen 210 to a designated folder page 330 according to an embodiment of the disclosure.

Referring to FIGS. 6A to 6B, the electronic device 101 according to an embodiment may obtain an input corresponding to a home screen 310 or a page of the home screen 310 in which at least one second widget 410 is disposed, and generate a designated object 320 and/or a designated folder page 330 corresponding to the home screen 310 or the page of the home screen 310 based on the obtained input corresponding to the home screen 310 or the page of the home screen 310.

For example, as illustrated in FIG. 6A, the size of the designated folder page 330 may be set to the size of the page of the home screen 310 or the home screen 310 enlarged or decreased at a designated magnification.

As illustrated in FIG. 6A, the electronic device 101 according to an embodiment may display a setting screen 610 corresponding to the page of the home screen 310 on the display 210 according to the user's touch input T (e.g., pinch close) on the home screen 310 or the page of the home screen 310. In an embodiment, the electronic device 101 may generate the designated object 320 or the designated folder page 330 corresponding to the home screen 310 or the page of the home screen 310 based on the user's touch input T corresponding to the setting screen 610 corresponding to the page of the home screen 310. For example, the designated object 320 corresponding to the designated folder page 330 generated on the home screen 310 or the page of the home screen 310 may be generated. For example, the generated designated object 320 may be positioned at a lower end of the home screen 310 or the page of the home screen 310.

In an embodiment, when the electronic device 101 generates the designated object 320 or the designated folder page 330 corresponding to the home screen 310 or the page of the home screen 310, the electronic device 101 may move at least one second widget 410 or at least one icon 610 included in the home screen 310 or the page of the home screen 310 corresponding to the user's touch input T to the designated folder page 440.

In an embodiment, the electronic device 101 may move the at least one second widget 410 or at least one icon 610 disposed on the home screen 310 or the page of the home screen 310 to the designated the folder page 330 while maintaining a specific size or specific position of the at least one icon 610. In an embodiment, the electronic device 101 may enlarge or reduce the at least one second widget 410 or at least one icon 610 disposed on the home screen 310 or the page of the home screen 310 at a designated magnification and move the same to the designated folder page 330.

In an embodiment, the electronic device 101 may maintain the folder 620 disposed on the home screen 310 or the page of the home screen 310 as it is without moving to the designated folder page 330.

In an embodiment, when receiving the user's touch input T to a portion of the home screen 310 or the page of the home screen 310, as illustrated in FIG. 6B, the electronic device 101 may generate the designated object 320 and/or the designated folder page 330 corresponding to the portion 630 of the home screen 310 or the page of the home screen 310.

In an embodiment, the electronic device 101 may move the at least one second widget 410 or at least one icon 610 disposed on the portion of the home screen 310 or the page of the home screen 310 to the generated designated folder page 330 while maintaining a specific size or specific position. For example, the size of the designated folder page 330 may be applied to be equal to the size of a partial area of the home screen 310 or the page of the home screen 310.

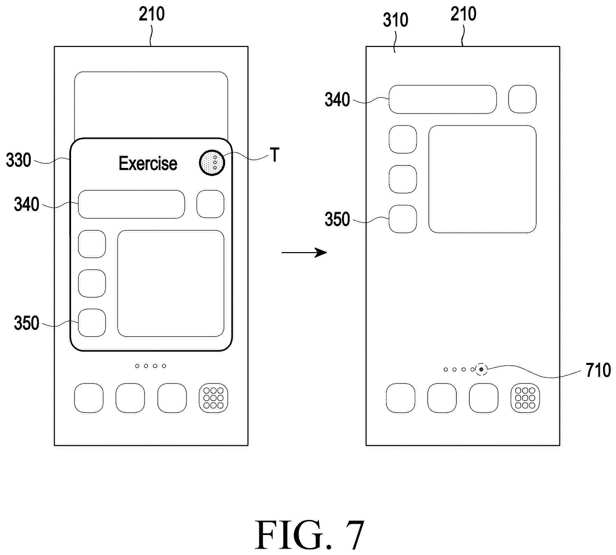

FIG. 7 illustrates an example of an operation of swapping a designated folder page 330 to a home screen 310 or a page 710 of the home screen 310 according to an embodiment of the disclosure.

Referring to FIG. 7, the electronic device 101 according to an embodiment may generate a page 710 of the home screen 310 corresponding to the designated folder page 330 in which at least one first widget 340 is disposed based on an input corresponding to the designated folder page 330 displayed on the display 210.

In an embodiment, the electronic device 101 may obtain the user's touch input T corresponding to the designated folder page 330. In an embodiment, the electronic device 101 may newly generate a page 710 of the home screen 310 that maintains at least one widget 340 and/or at least one icon 350 disposed on the designated folder page 330 as it is based on the user's touch input T. For example, the newly generated page 710 of the home screen 310 may be generated as the last page among the plurality of pages corresponding to the home screen 310.

In an embodiment, the home screen 310 or the page 710 of the home screen 310 may be set to be larger than the size of the designated folder page 330, and at least one widget 340 and/or at least one icon 350 disposed on the designated folder page 330 may be included in a partial area of the page 710 of the home screen 310.

In an embodiment, the home screen 310 or the page 710 of the home screen 310 may be set to have a size obtained by reducing or enlarging the designated folder page 330 at a designated magnification, or reducing or enlarging at least one widget 340 and/or at least one icon 350 disposed on the designated folder page 330.

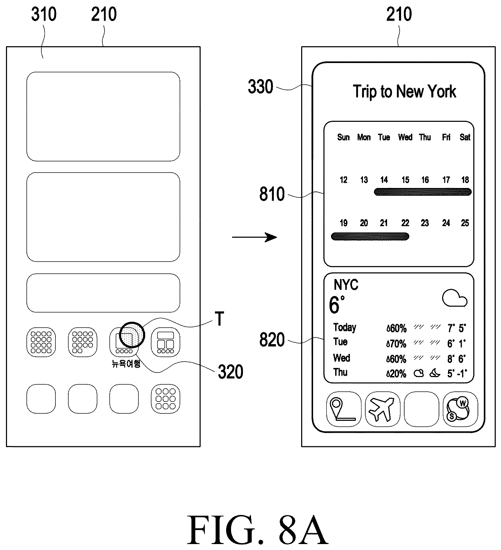

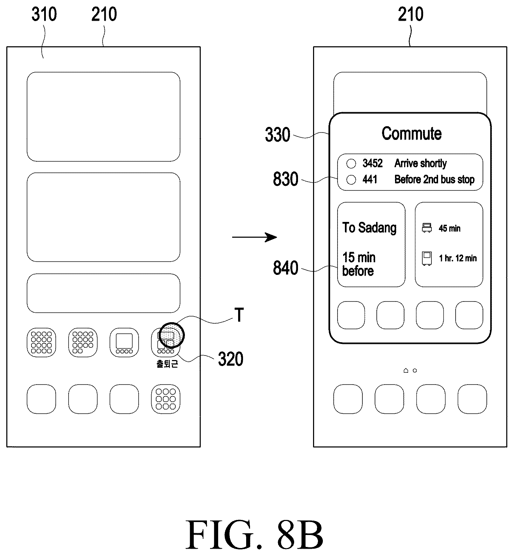

FIGS. 8A and 8B illustrate examples of a designated folder page 330 corresponding to a designated object 320 according to an embodiment of the disclosure.

Referring to FIGS. 8A and 8B, the electronic device 101 according to an embodiment may display the designated folder page 310 on the display 210 based on the user's touch input T to the designated object 320 disposed on the home screen 310 or the page of the home screen 310. In an embodiment, the electronic device 101 may display a designated folder page 330 on a higher layer than the home screen 310 or the page of the home screen 310.

In an embodiment, as illustrated in FIG. 8A, the designated folder page 330 may be related to a trip to New York, and for example, "a trip to New York" may be set as the title. In an embodiment, the electronic device 101 may identify the property of the designated folder page 330 as related to the trip to New York based on the set title.

For example, the designated folder page 330 may include a calendar widget 810 and a weather widget 820. For example, the designated folder page 330 may be set to have a size corresponding to the entire home screen 310.

In an embodiment, as illustrated in FIG. 8B, the designated folder page 330 may be related to commuting, and for example, "commuting" may be set as the title. In an embodiment, the electronic device 101 may identify the property of the designated folder page 330 as related to commuting based on the set title.

For example, the designated folder page 330 may include a bus arrival information widget 830 and a route recommendation widget 840. For example, the designated folder page 330 may be set to a size corresponding to a widget and an icon disposed inside to correspond to a portion of the home screen 310.

In an embodiment, the electronic device 101 may identify the property of the designated folder page 330 based on at least one first widget or at least one icon included in the designated folder page 330. For example, the electronic device 101 may identify the property of the designated folder page 330 based on artificial intelligence (AI).

Here, the property of the designated folder page 330 may be a concept including features such as a subject, a purpose of use, a type of a specific tool, and a service type.

In an embodiment, the electronic device 101 may identify the property of the designated folder page 330 based on the property of at least one first widget and/or a common property of at least one icon. For example, the electronic device 101 may identify the property of the designated folder page 330 based on the category (e.g., traffic information provision, entertainment, game) of application corresponding to at least one first widget or at least one icon.

In an embodiment, the electronic device 101 may modify the property of the designated folder page 330 based on the user's usage pattern or usage record.

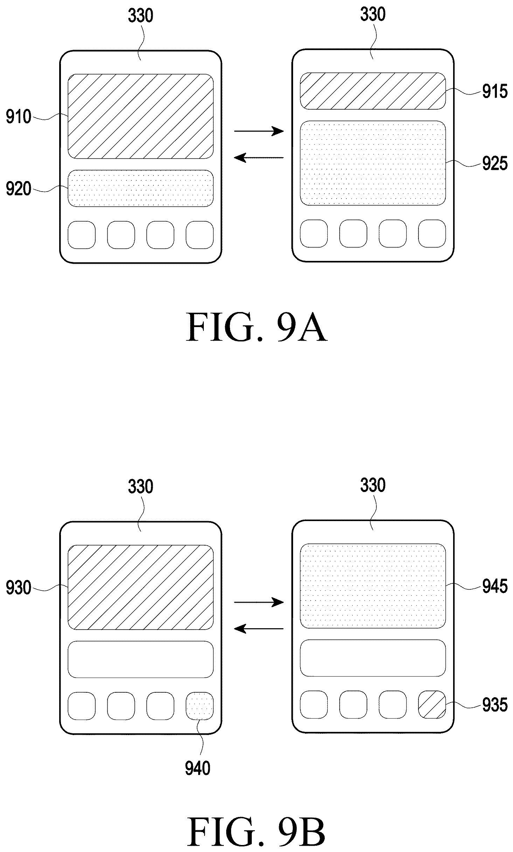

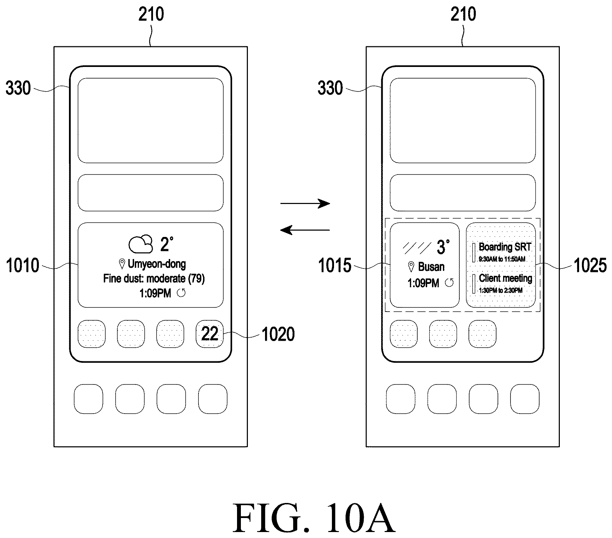

FIGS. 9A to 9E illustrate an example of changing an arrangement of a widget disposed on a designated folder page 330 according to an embodiment of the disclosure. FIGS. 10A to 10F illustrate an example of changing a display of a widget disposed on a designated folder page 330 according to an embodiment of the disclosure.

Referring to FIGS. 9A to 9E and 10A to 10F, the electronic device 101 according to an embodiment may change the arrangement and/or display of at least some of at least one widget or at least one icon 910, 920, 930, 940, 950, 960, 970, 980, 1010, 1020, 1030, 1040, 1060, 1070, 1080, 1091, 1092, 1095, and 1096.

In an embodiment, the electronic device 101 may change the arrangement or display of at least one widget or at least one icon 910, 920, 930, 940, 940, 960, 970, 980, 1010, 1020, 1030, 1040, 1050, 1060, 1070, 1080, 1091, 1092, 1095, and 1096 disposed on the designated folder page 330 based on a designated scenario according to the environment data or user activity data of the electronic device 101. In an embodiment, when the environment data or user activity data of the electronic device 101 meets a designated condition corresponding to the designated scenario, the arrangement or display of at least one widget or at least one icon 910, 920, 930, 940, 950, 960, 970, 980, 1010, 1020, 1030, 1040, 1050, 1060, 1070, 1080, 1091, 1092, 1095, and 1096, may be changed according to the designated scenario.

In an embodiment, when the designated condition corresponding to the designated scenario is met, the electronic device 101 may change the arrangement or display of at least one widget or at least one icon 910, 920, 930, 940, 950, 960, 970, 980, 1010, 1020, 1030, 1040, 1050, 1060, 1070, 1080, 1091, 1092, 1095, and 1096, in real-time, or may display the change information on the display 210.

In an embodiment, when designated conditions corresponding to a plurality of designated scenarios are simultaneously met, the electronic device 101 may change the arrangement or display of at least one widget or at least one icon 910, 920, 930, 940, 950, 960, 970, 980, 1010, 1020, 1030, 1040, 1050, 1060, 1070, 1080, 1091, 1092, 1095, and 1096, according to the highest priority scenario according to the priority. In an embodiment, the electronic device may display change information according to a subordinate scenario according to the priority on the display 210.

As illustrated in FIGS. 9A to 9E, the electronic device 101 according to an embodiment may relocate or resize at least some of the at least one widget or at least one icon 910, 920, 930, 940, 950, 960, 970, and 980 disposed on the designated folder page 330.

In an embodiment, when the electronic device 101 resizes or moves at least one widget or at least one icon 910, 920, 930, 940, 950, 960, 970, and 980 according to the designated scenario, the electronic device 101 may resizes another widget or icon.

In an embodiment, as illustrated in FIG. 9A, the electronic device 101 may reduce the size of the first widgets 910 and 915 among the at least one widget disposed on the designated folder page 330. In an embodiment, the electronic device 101 may enlarge the size of the second widgets 920 and 925 among the at least one widgets 330 disposed on the designated folder page 330. In an embodiment, the electronic device 101 may adjust the sizes of the rest 920 and 925 of the at least one widget in response to reduction or enlargement of some 910 and 915 of the at least one widget disposed on the designated folder page 330.

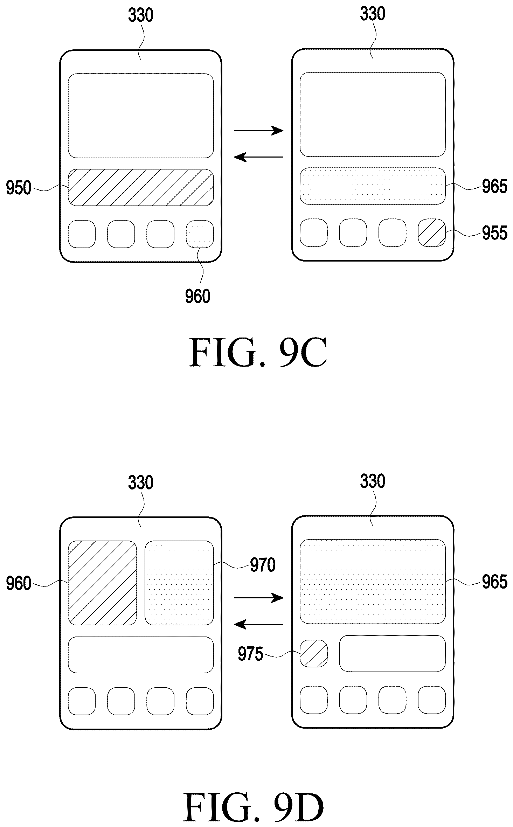

In an embodiment, as illustrated in FIGS. 9B and 9C, the electronic device 101 may swap at least one widget 930 and at least one icon 940 disposed on the designated folder page 330 with each other. In an embodiment, the electronic device 101 may change a widget 930 having a designated size disposed on the designated folder page 330 to an icon 935. In an embodiment, the electronic device 101 may change at least one icon 940 disposed on the designated folder page 330 to a widget 945 having a designated size.

In an embodiment, the electronic device 101 may change the first icon 960 disposed on the designated folder page 330 to the first widget 965. In an embodiment, the electronic device 101 may identify the second widget 950 corresponding to the size of the first widget 965 to be changed, and may dispose the first widget 965 at the position of the second widget 950. In an embodiment, the electronic device 101 may change the second widget 950 to a second icon 955 and arrange the second icon 965 at the position of the first icon 960.

In an embodiment, as illustrated in FIG. 9D, the electronic device 101 may change the size and/or arrangement of at least one widget 960 and 970 disposed on the designated folder page 330. In an embodiment, the electronic device 101 may extend the size of the first widget 960 disposed on the designated folder page 330 to the position where the second widget 970 is disposed. In an embodiment, the electronic device 101 may move or reduce the second widget 970 in response to the enlargement of the first widget 960. In an embodiment, the electronic device 101 may change the second widget 970 to the second icon 975 in response to the enlargement of the first widget 960.

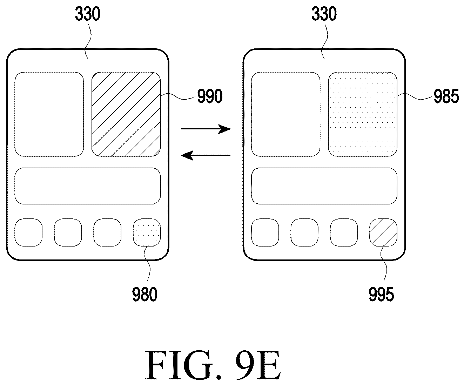

In an embodiment, as illustrated in FIG. 9E, when the first icon 980 disposed on the designated folder page 330 is changed to the first widget 985, the electronic device 101 may identify the second widget 990 corresponding to the size of the first widget 985 to be changed. In an embodiment, when there are a plurality of widgets corresponding to the size of the first widget 985 to be changed, the electronic device 101 may identify the widget relatively adjacent to the first icon 980 as the second widget 990. In an embodiment, the electronic device 101 may dispose the first widget 985 at the position of the second widget 990 and change the second widget 990 to the second icon 995 to dispose the second icon 995 at the position of the first icon 980.

As illustrated in FIGS. 10A to 10F, the electronic device 101 according to an embodiment may change the display and arrangement of some of at least one widget or at least one icon 1010, 1020, 1030, 1040, 1050, 1060, 1070, 1080, 1091, 1092, 1095, and 1096 disposed on the designated folder page 330 based on the designated scenario.

In an embodiment, the electronic device 101 may obtain environment data or user activity data of the electronic device 101, and identify whether a designated condition corresponding to the designated scenario is met based on the obtained environment data and/or activity data. In an embodiment, the environment data of the electronic device 101 may include position data, time data, weather data, and movement data of the electronic device 101. In an embodiment, the activity data of the user may include biometric data of the user (e.g., heart rate, body temperature, and blood pressure).

In an embodiment, as illustrated in FIG. 10A, the electronic device 101 may dispose a weather widget 1010 and a calendar icon 1020 on the designated folder page 330. In an embodiment, the weather widget 1010 may be disposed in a relatively large size on the designated folder page 330 and the calendar icon 1020 may be disposed in a relatively small size.

In an embodiment, the electronic device 101 may identify time data of the electronic device 101 and a schedule stored in an application corresponding to the calendar icon 1020, and may change the display of the calendar icon 1020 in response to the schedule corresponding to the identified time data. For example, the electronic device 101 may swap the calendar icon 1020 to the calendar widget 1025.

In an embodiment, the electronic device 101 may identify the place included in the schedule based on the schedule corresponding to the identified time data, and change the display of the weather widget 1010 into a display form 1015 corresponding to the identified place.

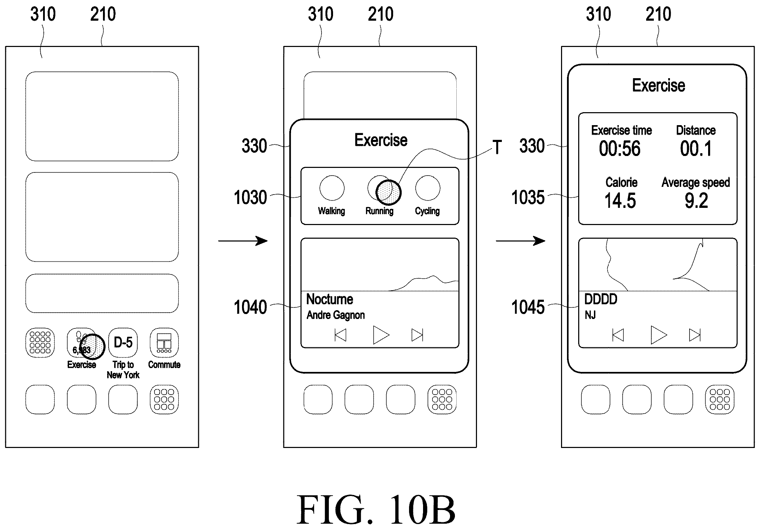

In an embodiment, as illustrated in FIG. 10B, the electronic device 101 may set the designated folder page 330 related to exercise, display the same on the display 210, and dispose a health widget 1030 and a music widget 1040 on the designated folder page 330. In an embodiment, the electronic device 101 may identify the user's exercise start or exercise type based on the identified user's activity data or movement data of the electronic device. In an embodiment, the electronic device 101 may identify the user's exercise start or exercise type according to the user's input or a signal received from a connected wearable device.

In an embodiment, the electronic device 101 may change the display of the health widget 1030 into a display form 1035 that provides exercise information according to the identified exercise type. In an embodiment, the electronic device 101 may control the display of the music widget 1040 in a display form 1045 that provides a designated playlist or a playlist recommended for exercise.

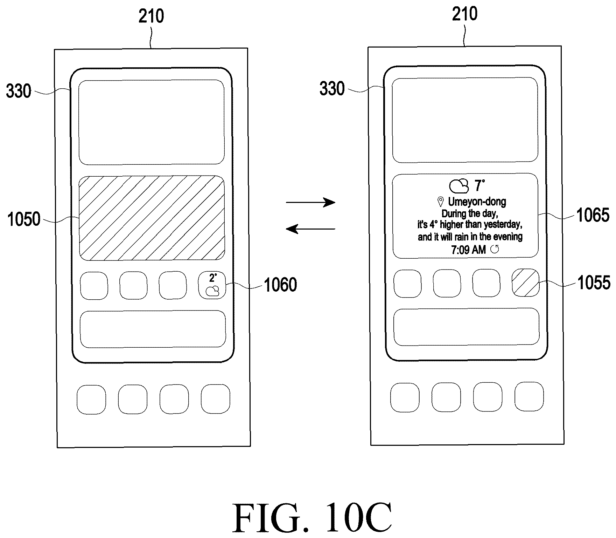

In an embodiment, as illustrated in FIG. 10C, the electronic device 101 may include an icon 1060 of a weather application on the designated folder page 330.

In an embodiment, the electronic device 101 may identify a scenario in which the user prepares to go to work at home at commuting time based on the time data and/or position data of the electronic device 101.

In an embodiment, the electronic device 101 may swap the weather application icon 1060 to the weather widget 1065 in response to the identified work scenario. In an embodiment, as the weather application icon 1060 is swapped to the weather widget 1065, another widget 1050 may be temporarily reduced or swapped to the icon 1055.

In an embodiment, the electronic device 101 may change the display of the weather widget 1065 to provide temperature information and/or precipitation information compared to the previous day in response to the commute scenario.

In an embodiment, the weather widget 1065 may be included in the designated folder page 330, and the electronic device 101 may enlarge the weather widget 1065 or change the display of the weather widget 1065 in response to the commute scenario.

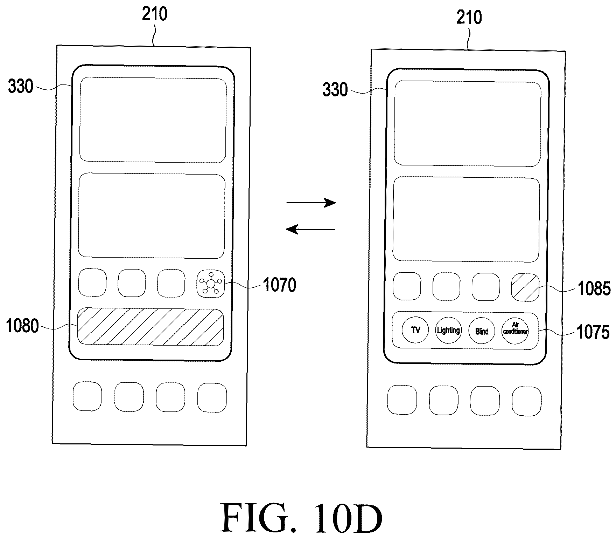

In an embodiment, as illustrated in FIG. 10D, the electronic device 101 may include an icon 1070 of an IoT application (e.g., Smartthings) in the designated folder page 330. In an embodiment, the electronic device 101 may identify a scenario in which the user is positioned at home or office based on position data of the electronic device 101.

In an embodiment, the electronic device 101 may swap the icon 1070 of the IoT application to the IoT widget 1075 in response to the identified scenario in a specific place. In an embodiment, as the icon 1070 of the IoT application swaps to the IoT widget 1075, another widget 1080 may be temporarily reduced or swapped to the icon 1085.

In an embodiment, the electronic device 101 may display a controllable device or change the display of the IoT widget 1075 to provide a controller of the controllable device in response to the scenario in the specific place.

In an embodiment, the IoT widget 1075 may be included in the designated folder page 330, and the electronic device 101 may enlarge the IoT widget 1075 or change the display of the IoT widget 1075 in response to the scenario in the specific place.

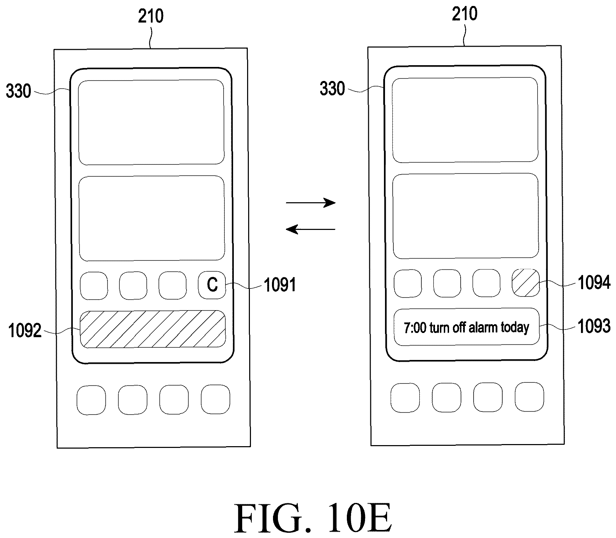

In an embodiment, as illustrated in FIG. 10E, in the electronic device 101, an icon 1091 of an alarm application may be disposed on the designated folder page 330. In an embodiment, the electronic device 101 may identify an alarm release scenario when it is before (e.g., 3 hours before) the designated alarm time based on the time data. In an embodiment, the electronic device 101 may identify an alarm release scenario when it is not a designated position based on the position data.

In an embodiment, the electronic device 101 may swap the icon 1091 of the alarm application to the alarm widget 1093 based on the alarm release scenario. In an embodiment, as the alarm icon 1091 is swapped to the alarm widget 1093, another widget 1092 may be temporarily reduced or swapped to the icon 1094.

In an embodiment, the electronic device 101 may change the display of the alarm widget 1093 to provide an alarm release button based on the alarm release scenario.

In an embodiment, an alarm widget 1094 may be included in the designated folder page 330, and the electronic device 101 may enlarge the alarm widget 1094 or change the display of the alarm widget 1094 in response to the alarm release scenario.

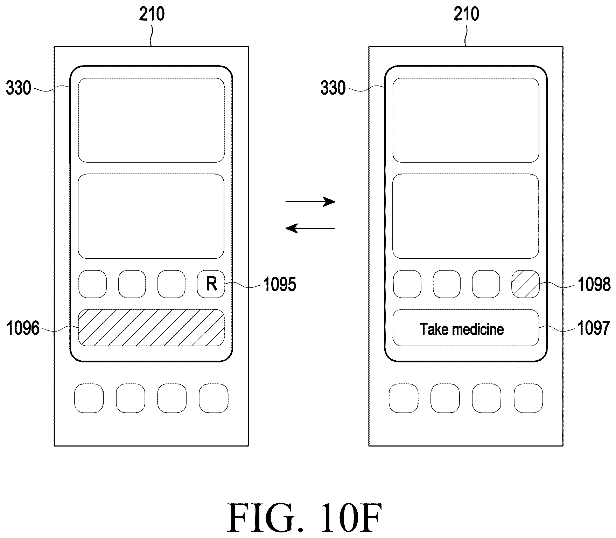

In an embodiment, as illustrated in FIG. 10F, the electronic device 101 may dispose an icon 1095 of a scheduler application on a designated folder page. In an embodiment, when it is a time corresponding to a designated schedule based on the time data, the electronic device 101 may identify a schedule scenario.

In an embodiment, the electronic device 101 may swap the icon 1095 of the scheduler application to the schedule widget 1097 based on the schedule scenario. In an embodiment, as the icon 1095 of the scheduler application icon is swapped to the schedule widget 1097, another widget 1096 may be temporarily reduced or swapped to the icon 1098.

In an embodiment, the electronic device 101 may change the display of the schedule widget 1097 to provide schedule content based on the schedule scenario.

In an embodiment, the schedule widget 1097 may be included in the designated folder page 330, and the electronic device 101 may enlarge the schedule widget 1097 or change the display of the schedule widget 1097 in response to the schedule scenario.

In an embodiment, when a condition corresponding to the identified scenario is released, or when a designated time elapses, the electronic device 101 may change the arrangement and/or display of at least one widget or at least one icon 910, 920, 930, 940, 950, 960, 970, 980, 1010, 1020, 1030, 1040, 1050, 1060, 1070, 1080, 1091, 1092, 1095, and 1096, as before.

In an embodiment, as described in connection with FIGS. 9A to 9E and 10A to 10F, the electronic device 101 may change the arrangement or display of at least one widget or at least one icon disposed on the designated folder page 330 based on the designated scenario according to environment data of the electronic device 101 or user activity data, and may change and display the designated object 320 by reflecting the arrangement or display of at least one widget or at least one icon disposed on the changed designated folder page 330.

In an embodiment, the electronic device 101 may modify the display of at least one first widget and/or icon included in the designated folder page 330 based on the property of the designated folder page 330.

For example, if the property of the designated folder page 330 is related to trip, the display of the widget may be changed to display an expected itinerary or schedule in the calendar widget. For example, when the property of the designated folder page 330 is related to economic life (or financial management), the display of the calendar widget may be changed to display deposit and withdrawal events such as paydays or card payment days in the calendar widget.

For example, when an icon or widget of a calculator application is present in the designated folder page 330 whose property is related to economic life, the electronic device 101 may identify user activity data related to the scenario in which a question related to the cost of living is present with the family this month or the cost of living is to be identified this month through a messenger. In this case, the electronic device 101 may change the arrangement or display of the widget and/or icon of the designated folder page 330 to preferentially display the card application or bank application and calculator on the designated folder page 330 related to economic life.

For example, when the icon or widget of the calculator application is present in the designated folder page 330 whose attribute is related to trip, the electronic device 101 may change the arrangement or display to display the icon or widget of the calculator application of the designated folder page 330 related to trip without change (or in a subordinate order).

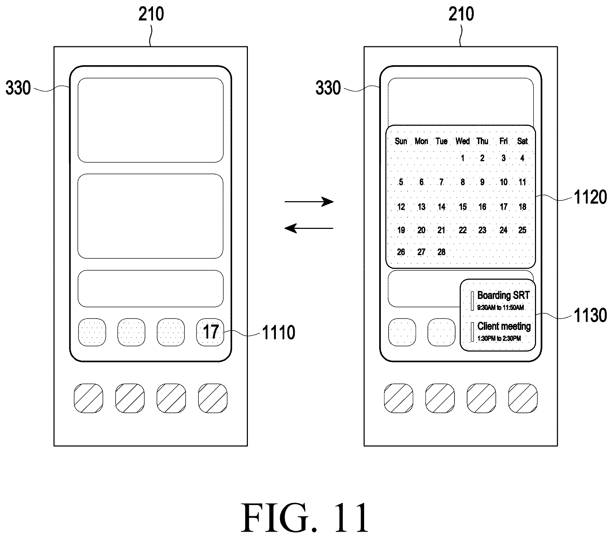

FIG. 11 illustrates an example of a page icon 1110 disposed on a designated folder page 330 according to an embodiment of the disclosure.

Referring to FIG. 11, the electronic device 101 according to an embodiment may change the arrangement and/or display of at least one widget or at least one icon included in the designated folder page 330 according to the designated scenario. In an embodiment, the electronic device 101 may swap the page icon 1110 positioned on the designated folder page 330 to the page 1120, 1130 corresponding to at least one widget displayed on a higher layer above the designated folder page 330 according to the designated scenario.

In an embodiment, when there is insufficient space to swap and enlarge the at least one page icon 1110 to a widget according to the designated scenario, the electronic device 101 may swap to the page 1120, 1130 displaying the at least one page icon 1110 on a higher layer above the designated folder page 330.

For example, the electronic device 101 may swap the page icon 1110 corresponding to the scheduler application to a page 1120 including a calendar widget and a page 1130 including a schedule widget. For example, the page 1120 including the calendar widget and the page 1130 including the schedule widget may be displayed on a higher layer above the designated folder page 330.

In an embodiment, based on the user's touch input to the page icon 1110, the electronic device 101 may swap the page icon 1110 to the page 1120, 1130 corresponding to at least one widget displayed on a higher layer above the designated folder page 330 and display the same on the display 210.

FIG. 12 illustrates a designated folder page 330 displayed corresponding to an input corresponding to a floating object 1220 according to an embodiment of the disclosure.

Referring to FIG. 12, the electronic device 101 according to an embodiment may display a content screen 1210 corresponding to an application or an operation executed in the foreground on the display 210. In an embodiment, the electronic device 101 may display the content screen 1210 on the display on a higher layer above the home screen (e.g., the home screen 310 of FIG. 3A).

In an embodiment, the electronic device 101 may display a floating object 1220 displayed above the content screen 1210 displayed on the display 210. For example, the floating object 1220 may be disposed on the edge of the display 210, and may be displayed on the uppermost layer of the screen displayed on the display 210.

In an embodiment, when obtaining a touch input (e.g., press or drag) corresponding to the floating object 1220, the electronic device 101 may display the designated folder page 330 on the display 210. In an embodiment, at least one widget 340 and/or the icon 350 of at least one application may be disposed on the designated folder page 330.

In an embodiment, the electronic device 101 may identify a recommended application or a recommended task based on an application or task corresponding to the content screen 1210 displayed on the display 210. In an embodiment, the electronic device 101 may identify an application corresponding to the content screen 1210 or a recommended application or a recommended task corresponding to the category of the task.

In an embodiment, the electronic device 101 may store the user's usage pattern related to the application or task corresponding to the content screen 1210, and identify a recommended application or a recommended task according to the stored usage pattern.

In an embodiment, the electronic device 101 may display an object 1230 corresponding to the identified recommended application or recommended task on a partial area 333 of the designated folder page 330. In an embodiment, the electronic device 101 may include a plurality of areas 333 and 335 separated from the designated folder page 330, and may passively dispose at least one widget and/or the icon of at least one application disposed in a specific size and/or a specific position in the partial area 335.

In an embodiment, the electronic device 101 may automatically identify a recommended application or a recommended task, and may dispose an icon 1230 or widget corresponding to the recommended application or the recommended task in the partial area 333 of the designated folder page 330.

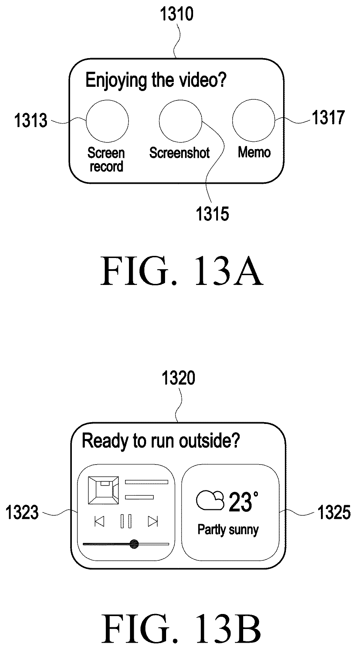

FIGS. 13A to 13D illustrate examples of a recommended application or a recommended task according to an embodiment of the disclosure.

Referring to FIGS. 13A to 13D, the electronic device 101 may identify a recommended application or recommended task related to an application or task corresponding to a content screen (e.g., the content screen 1210 of FIG. 12).

In an embodiment, as illustrated in FIG. 13A, when the electronic device 101 displays the content screen 1210 on the display according to the execution of the video playback application (e.g., Netflix^{™}), a recommended application or a recommended task related to video playback may be identified.

For example, the electronic device 101 may identify the application or task corresponding to each of a screen record, a screenshot, and/or a memo as the recommended application or recommended task. For example, the electronic device 101 may display the recommended application or the recommended task 1310 including icons 1313, 1315, and 1317 respectively corresponding to the screen record, screenshot, and/or memo in the partial area 333 of the designated folder page 330.

In an embodiment, as illustrated in FIG. 13B, when the electronic device 101 displays the content screen 1210 on the display 210 according to the execution of the health application (e.g., Samsung^{™} health), the electronic device 101 may identify the recommended application or the recommended task related to exercise.

For example, the electronic device 101 may identify the application or task corresponding to music playback and/or weather as the recommended application or the recommended task. For example, the electronic device 101 may display the recommended application or the recommended task 1320 including widgets 1323 and 1325 corresponding to music playback and/or weather in a partial area 333 of the designated folder page 330.

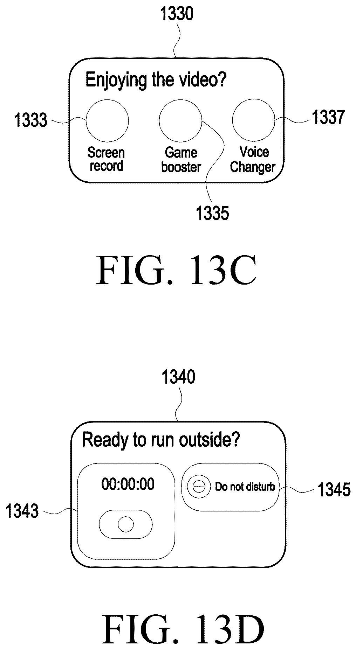

In an embodiment, as illustrated in FIG. 13C, when the electronic device 101 displays the content screen 1210 on the display 210 according to the execution of the game application (e.g., Genshin^{™}), the electronic device 101 may identify the recommended application or the recommended task related to the game.

For example, the electronic device 101 may identify the application or task corresponding to screen record, game booster, and/or voice changer as the recommended application or recommended task. For example, the electronic device 101 may display the recommended application or the recommended task 1330 including icons 1333, 1335, and 1337 corresponding to screen record, game booster, and/or voice changer on a partial area 333 of the designated folder page 330.

In an embodiment, as illustrated in FIG. 13D, when the electronic device 101 displays the content screen 1210 on the display 210 according to the execution of a note application (e.g., Samsung^{™} note), the electronic device 101 may identify the recommended application or the recommended task related to a meeting.

For example, the electronic device 101 may identify the application or task corresponding to voice recorder and/or do-not-disturb mode as the recommended application or recommended task. For example, the electronic device 101 may display the recommended application or recommended task 1340 including widgets 1343 and 1345 corresponding to voice recorder and/or do-not-disturb mode on a partial area 333 of the designated folder page 330.

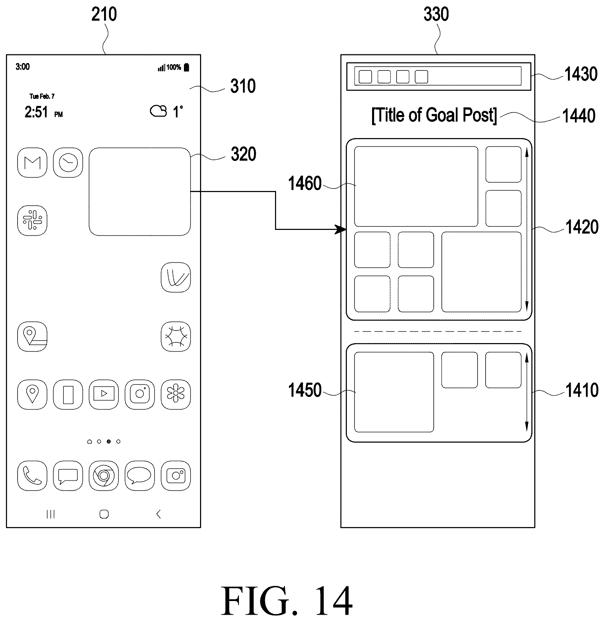

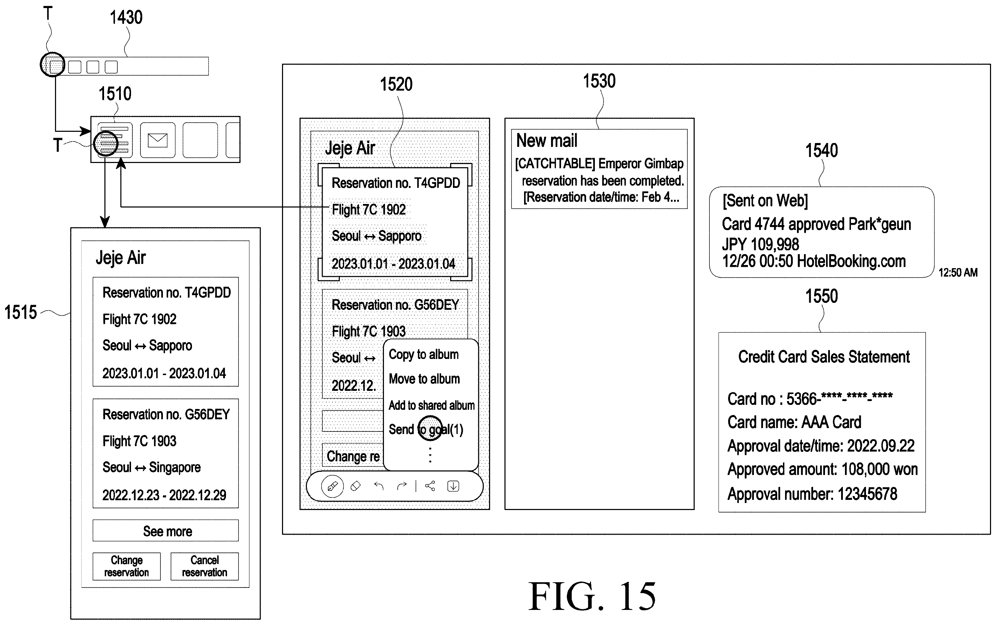

FIG. 14 illustrates a designated folder page 330 according to an embodiment of the disclosure. FIG. 15 illustrates a feed 1430 of a designated folder page 330 according to an embodiment of the disclosure in detail.

Referring to FIGS. 14 to 15, the electronic device 101 according to an embodiment may display a designated folder page on a higher layer above the home screen 310 by the user's input corresponding to the designated object 320 disposed on the home screen 310 or the page of the home screen 310. In an embodiment, the designated object 320 may be a widget or icon disposed in a specific size or a specific position on the home screen 310 or the page of the home screen 310.

In an embodiment, the designated folder page 330 may include a title 1440, a first area 1410, a second area 1420, and/or a third area 1430 corresponding to the designated folder page 330. For example, the first area 1410, the second area 1420, and the third area 1430 may be areas separated from each other inside the designated folder page 330.

The electronic device 101 according to an embodiment may generate the title 1440 on the designated folder page 330 and store the generated title 1440 corresponding to the designated folder page 330. In an embodiment, the electronic device 101 may display the title 1440 generated corresponding to the designated folder page 330 on the designated folder page 330. In an embodiment, the electronic device 101 may automatically generate the title 1440 of the designated folder page 330 corresponding to the resource 1515 stored in relation to the designated folder page 330 to be described below. In an embodiment, the electronic device 101 may directly receive the title 1440 of the designated folder page 330 from the user.

The electronic device 101 according to an embodiment may receive resources 1520, 1530, 1540, and 1550 related to the designated folder page 330 and store the received resources 1520, 1530, 1540, and 1550 as feeds corresponding to the designated folder page 330. In an embodiment, the resources 1520, 1530, 1540, and 1550 may include text data or image data.

The electronic device 101 according to an embodiment may receive and store at least one resource as a feed corresponding to the designated folder page 330. In an embodiment, the electronic device 101 may dispose a feed icon 1510 corresponding to the feed received in relation to the obtained resources 1520, 1530, 1540, and 1550 in the third area 1430 of the designated folder page 330.

In an embodiment, the electronic device 101 may display at least one resource 1515 stored as a feed on the display 210 corresponding to the user's touch input T to the feed icon 1510.

In an embodiment, the electronic device 101 may receive image data 1520 such as a screenshot as a feed corresponding to the designated folder page 330. In an embodiment, the electronic device 101 may parse text from the input image data 1520 and store it as a feed.

In an embodiment, the electronic device 101 may receive image data or text data corresponding to at least a portion 1530 of the notification as a feed corresponding to the designated folder page 330.

In an embodiment, the electronic device 101 may receive image data or text data corresponding to at least a portion 1540 of a text message as a feed corresponding to the designated folder page 330.

In an embodiment, the electronic device 101 may receive image data or text data corresponding to at least a portion 1540 of the payment receipt as a feed corresponding to the designated folder page 330.

The electronic device 101 according to an embodiment may identify the recommended application or the recommended task corresponding to the designated folder page 330 based on the resource 1515 input to the designated folder page 330 and stored in the feed.

In an embodiment, the electronic device 101 may extract at least some text from text data or image data included in the resource 1515 input to the designated folder page 330 and stored in the feed, and identify the recommended application or the recommended task based on the extracted at least some text.

In an embodiment, the electronic device 101 may dispose a widget or icon 1450 corresponding to the identified recommended application or recommended task in the first area 1410 of the designated folder page 330.

The electronic device 101 according to an embodiment may obtain an input corresponding to at least one widget or at least one icon included in the home screen 310 or the page of the home screen 310, and dispose at least one widget or at least one icon at a specific position or in a specific size in a second area of the designated folder page based on the obtained input.

In an embodiment, at least one widget or icon 1460 disposed in the second area 1420 of the designated folder page 330 may be one moved or copied to the designated folder page 330 based on an input corresponding to at least one widget or at least one icon included in the home screen 310 or the page of the home screen 310.

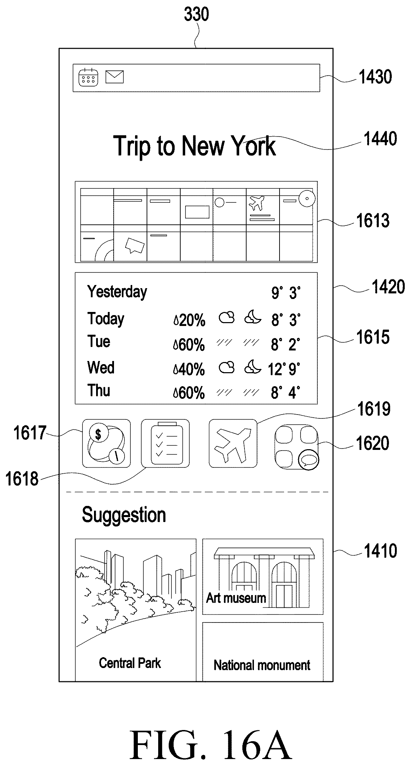

FIGS. 16A to 16C illustrate examples of a designated folder page 330 according to an embodiment of the disclosure.

Referring to FIGS. 16A to 16C, the electronic device 101 according to an embodiment may set various designated folder pages 330 in which at least one widget 1613 and 1615 (e.g., the first widget 340 of FIG. 3A) is disposed. In an embodiment, the electronic device 101 may display the designated folder page 330 on the display (e.g., the display 210 of FIG. 2) based on the user's input.

As illustrated in FIG. 16A, the electronic device 101 according to an embodiment may store the designated folder page 330 in which "New York trip" is set as the title 1440. In an embodiment, the electronic device 101 may dispose the set title 1440 on the designated folder page 330.

The electronic device 101 according to an embodiment may receive a schedule and/or a portion of a text message as a feed and store it corresponding to the designated folder page 330. In an embodiment, the electronic device 101 may dispose a feed icon (e.g., the feed icon 1510 of FIG. 15) corresponding to the input and stored feed in the third area 1430 of the designated folder page 330.

The electronic device 101 according to an embodiment may dispose at least one widget 1613 and 1615 or at least one icon 1617, 1618, 1619, and 1620 at a specific position or a specific size in the second area 1420 of the designated folder page 330.

For example, the electronic device 101 may dispose a calendar widget 1613, a weather widget 1615, an icon 1617 of a currency exchange application, an icon 1618 of a memo application, an icon 1619 of a ticket application, and/or an icon 1620 of a shortcut to a specific chat room of an SNS application in the second area 1420 of the designated folder page 330.

In an embodiment, the electronic device 101 may dispose the recommended application or the recommended task identified based on a resource input to the designated folder page 330 and stored in the feed in the first area 1410 of the designated folder page 330.

For example, the electronic device 101 may dispose information related to a trip to New York or a widget related to a task in the first area 1410 of the designated folder page 330.

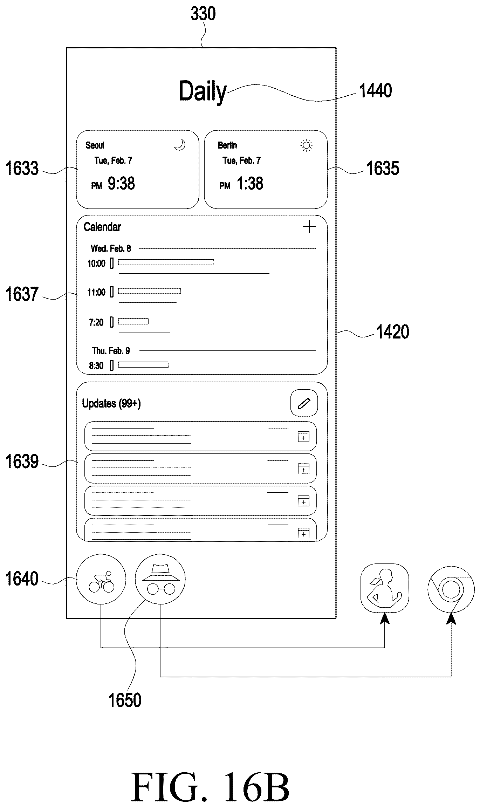

As illustrated in FIG. 16B, the electronic device 101 according to an embodiment may store the designated folder page 330 in which "Daily" is set as the title 1440. In an embodiment, the electronic device 101 may dispose the set title 1440 on the designated folder page 330.

The electronic device 101 according to an embodiment may dispose at least one widget or at least one icon at a specific position or in a specific size in the second area 1420 of the designated folder page 330.

For example, the electronic device 101 may dispose the world time widgets 1633 and 1635, the schedule widget 1637, the email widget 1639, the bicycle riding icon 1640 corresponding to the exercise application, and/or the secret mode icon 1650 corresponding to the Internet application (e.g., Chrome) in the second area 1420 of the designated folder page 330.

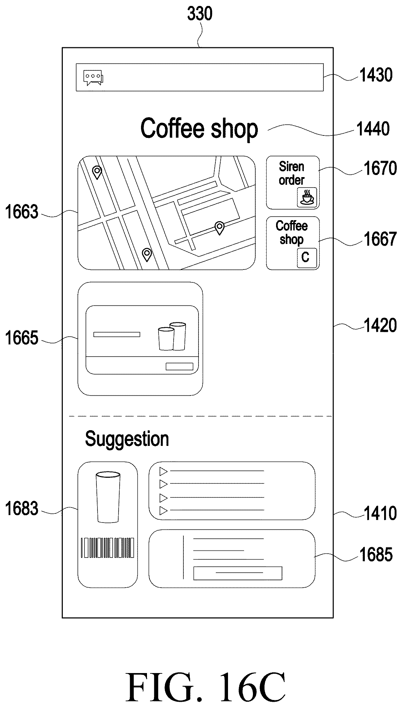

As illustrated in FIG. 16C, the electronic device 101 according to an embodiment may store the designated folder page 330 in which "coffee shop" is set as the title 1440. In an embodiment, the electronic device 101 may dispose the set title on the designated folder page 330.

The electronic device 101 according to an embodiment may receive a portion of the messenger through a feed and store it corresponding to the designated folder page 330. In an embodiment, the electronic device 101 may dispose a feed icon 1510 corresponding to a feed received and stored in the third area 1430 of the designated folder page 330.

The electronic device 101 according to an embodiment may dispose at least one widget 1663 and 1665 or at least one icon 1667 and 1670 at a specific position or in a specific size in the second area 1420 of the designated folder page 330.

For example, the electronic device 101 may dispose a widget 1663 corresponding to a coffee shop search task, a widget 1665 corresponding to a shortcut to a coffee shop coupon, an icon 1670 of an application related to a coffee order, and/or an icon 1667 corresponding to a shortcut of a memo application to a coffee shop list in the second area 1420 of the designated folder page 330.

The electronic device 101 according to an embodiment may dispose the recommended application or the recommended task identified based on a resource input to the designated folder page 330 and stored in a feed in the first area 1410 of the designated folder page 330. For example, the electronic device 101 may dispose widgets 1683 and 1685 corresponding to a result of searching for a coffee coupon in a text message or a result of searching for a messenger with a keyword of "coffee" in the first area 1410 of the designated folder page 330.

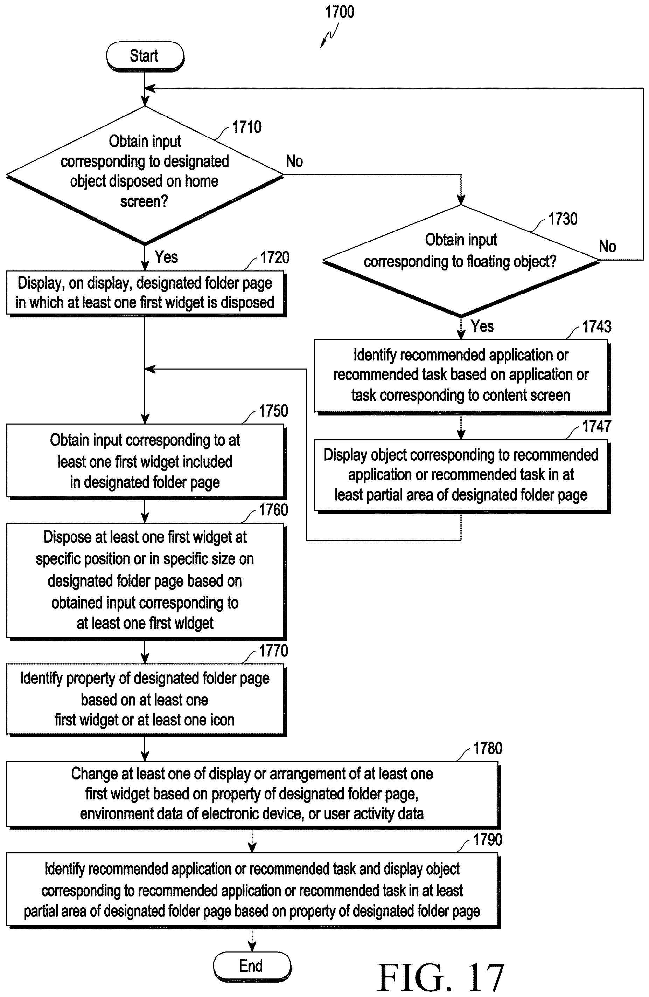

FIG. 17 is a flowchart 1700 illustrating a method for operating an electronic device 101 according to an embodiment of the disclosure.

Referring to FIG. 17, in operation 1710, the electronic device 101 according to an embodiment may identify whether an input corresponding to a designated object 320 disposed on a home screen 310 is obtained.

When an input corresponding to the designated object 320 disposed on the home screen 310 is obtained (operation 1710-Yes), the electronic device 101 according to an embodiment may display the designated folder page 330 in which at least one first widget 340 is disposed on the display 210 in operation 1720.

When the input corresponding to the designated object 320 disposed on the home screen 310 is not obtained (operation 1710-No), the electronic device 101 according to an embodiment may identify whether the input corresponding to the floating object 1220 is obtained in operation 1730.

When the input corresponding to the floating object 1220 is obtained (operation 1730-Yes), the electronic device 101 according to an embodiment may identify a recommended application or a recommended task based on an application or operation corresponding to the content screen in operation 1743.

In operation 1747, the electronic device 101 according to an embodiment may display an object 1230 corresponding to the recommended application or the recommended task in at least a partial area of the designated folder page 330.

When the input corresponding to the floating object 1220 is not obtained (operation 1730-No), the electronic device 101 according to an embodiment may again identify whether the input corresponding to the designated object 320 disposed on the home screen 310 is obtained in operation 1710.

In operation 1750, the electronic device 101 according to an embodiment may obtain the input corresponding to at least one first widget 340 included in the designated folder page 330.

In operation 1760, the electronic device 101 according to an embodiment may dispose at least one first widget 340 at a specific position or in a specific size on the designated folder page 330 based on the obtained input corresponding to the at least one first widget 340.

The electronic device 101 according to an embodiment may store data related to at least one first widget 340 included in the designated folder page 330 corresponding to the designated object 320. In an embodiment, when the position or arrangement of at least one first widget 340 disposed on the designated folder page 330 is changed, the electronic device 101 may store the changed data corresponding to the designated object 320.

In operation 1770, the electronic device 101 according to an embodiment may identify the property of the designated folder page 330 based on at least one first widget 340 or at least one icon 350 disposed on the designated folder page 330.

In operation 1780, the electronic device 101 according to an embodiment may change at least one of display or arrangement of at least one first widget based on the property of the designated folder page 330, environment data of the electronic device 101, or user activity data.

The electronic device 101 according to an embodiment may obtain environment data of the electronic device 101 or user activity data. The electronic device 101 according to an embodiment may change at least one of display or arrangement of at least one first widget 340 based on environment data or activity data.

In operation 1790, the electronic device 101 according to an embodiment may identify the recommended application or the recommended task based on the property of the designated folder page 330, and display the object corresponding to the identified recommended application or the recommended task in at least a partial area of the designated folder page 330.

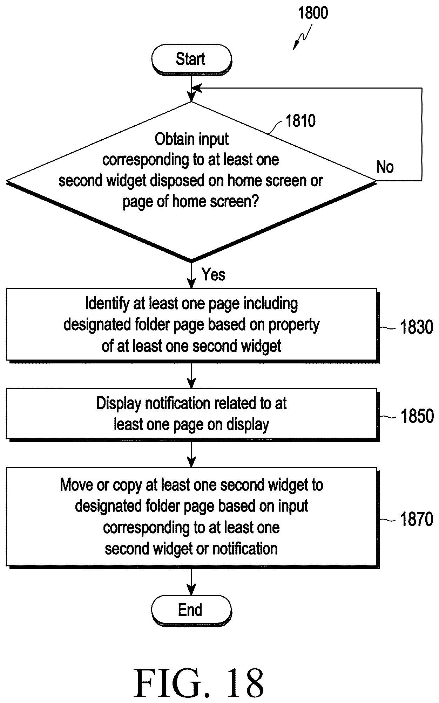

FIG. 18 is a flowchart 1800 of an operation method of moving or copying a widget to a designated folder page 330 of an electronic device 101 according to an embodiment of the disclosure.

Referring to FIG. 18, the electronic device 101 according to an embodiment may identify whether the input corresponding to the at least one second widget 410 disposed on the home screen 310 or the page of the home screen 310 is obtained in operation 1810.

In operation 1830, the electronic device 101 according to an embodiment may identify at least one page including the designated folder page 330 based on the property of the at least one second widget 410.

In operation 1850, the electronic device 101 according to an embodiment may display the notification 510 related to at least one page on the display 210. In an embodiment, the notification 510 may include at least one selection button corresponding to at least one page. In an embodiment, the electronic device 101 may receive the user's input to at least one selection button corresponding to at least one page included in the notification 510.

In operation 1870, the electronic device 101 according to an embodiment may move or copy the at least one second widget 410 to the designated folder page 330 based on the input corresponding to the at least one second widget 410 or notification 510.

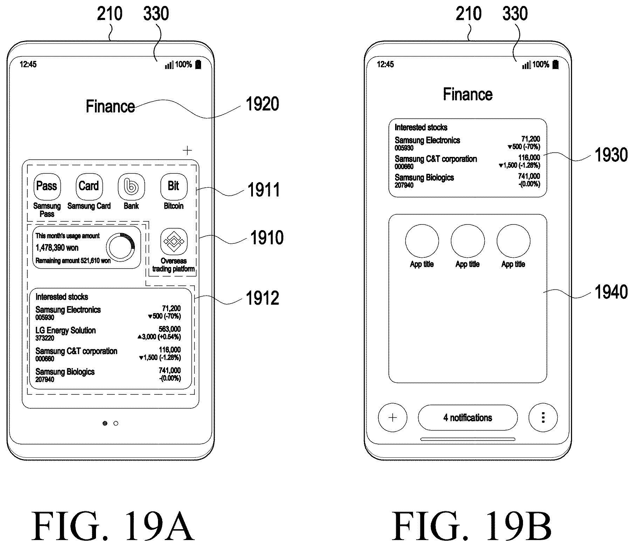

FIGS. 19A and 19B illustrate a designated folder page 330 according to an embodiment of the disclosure.

Referring to FIGS. 19A and 19B, the electronic device 101 according to an embodiment may display the designated folder page 330 in which each of at least one icon and at least one widget are disposed on the display 210.

The electronic device 101 according to an embodiment may store the designated folder page 330 in which "Finance" is set as the title 1920. In an embodiment, the electronic device 101 may dispose the set title 1920 in the designated folder page 330. Referring to FIG. 19A, in an embodiment, the designated folder page 330 may include a title 1920 and/or a fourth area 1910 corresponding to the designated folder page 330. In an embodiment, each of a plurality of widgets 1912 and a plurality of icons 1911 may be disposed in the fourth area 1910 of the designated folder page 330.

The plurality of widgets 1912 and the plurality of icons 1911 disposed in the fourth area 1910 of the designated folder page 330 may be moved or copied to the designated folder page 330 based on the input corresponding to at least one widget or at least one icon included in the home screen 310 or the page of the home screen 310.

The electronic device 101 according to an embodiment may obtain the input corresponding to at least one widget or at least one icon included in the home screen 310 or the page of the home screen 310, and dispose the plurality of widgets 1912 and the plurality of icons 1911 at a preset position or in a preset size in the fourth area 1910 of the designated folder page 330 based on the obtained input.

Referring to FIG. 19B, in an embodiment, the designated folder page 330 may include a title 1920 and/or a fifth area 1940 corresponding to the designated folder page 330. In an embodiment, the plurality of icons may be disposed in the fifth area 1940. In an embodiment, the widget 1930 may be disposed in an area different from that of the fifth area 1940 in the designated folder page 330.

The electronic device 101 according to an embodiment may obtain the input corresponding to at least one widget 1930 or at least one icon included in the home screen 310 or the page of the home screen 310, and dispose at least one icon at a preset position or in a preset size in the fifth area 1940 of the designated folder page based on the obtained input.

In an embodiment, the electronic device 101 may obtain the input corresponding to at least one widget or at least one icon included in the home screen 310 or the page of the home screen 310, and dispose the widget 1930 in a preset size in an area different from the fifth area 1940 in the designated folder page 330 based on the obtained input.

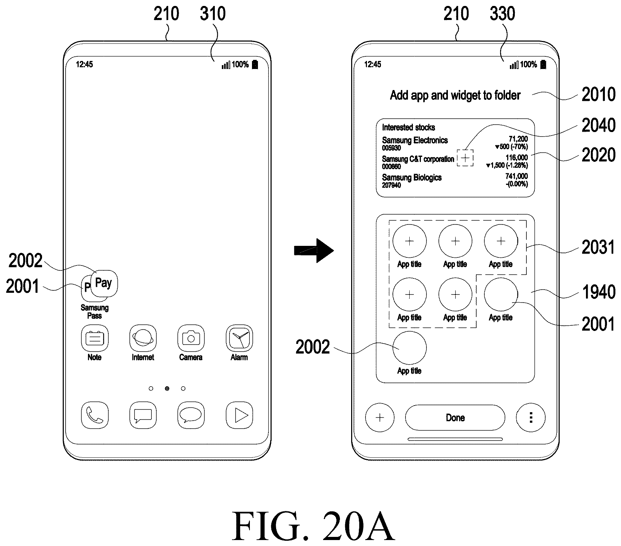

FIG. 20A illustrates an example of an operation of generating a designated folder page 330 according to an embodiment of the disclosure.

Referring to FIG. 20A, the electronic device 101 according to an embodiment may generate a designated folder page 330 including a plurality of objects based on inputs corresponding to a plurality of objects disposed on the home screen 310 or the page of the home screen 310 displayed on the display 210.

In an embodiment, the electronic device 101 may obtain the user's touch input T (e.g., hold & drag) to the third icon 2002 disposed on the home screen 310 or the page of the home screen 310. In an embodiment, the electronic device 101 may move the third icon 2002 in response to the user's touch input T.

In an embodiment, the electronic device 101 may obtain the user's touch input T to the fourth icon 2001 disposed on the home screen 310 or the page of the home screen 310. For example, the user's touch input T may be a hold&drag to the third icon 2002 and a release operation on the fourth icon 2001 disposed on the home screen 310 or the page of the home screen 310. For example, the above-described operation may be an operation of releasing the third icon 2002 at a position overlapping the fourth icon 2001 by holding and dragging the third icon 2002, as illustrated in FIG. 20A.

In an embodiment, the electronic device 101 may generate a designated folder page 330 including a third icon 2002 and a fourth icon 2001 in response to the user's touch input T in which the third icon 2002 overlaps the fourth icon 2001.

In an embodiment, the designated folder page 330 may include a title 2010 and/or a fifth area 1940 corresponding to the designated folder page 330. In an embodiment, the title 2010 corresponding to the designated folder page 330 may include information (e.g., "Add apps and widgets to the folder") indicating that the icon or widget may be added to the folder page 330.

In an embodiment, the third icon 2002, the fourth icon 2001, and at least one icon 2031 (or a recommendation icon) for adding at least one recommended application, may be disposed in the fifth area 1940 of the designated folder page 330. In an embodiment, the at least one recommended application may be an application corresponding to the category of the third icon 2002 and the fourth icon 2001. For example, based on identifying that the application corresponding to the third icon 2002 and the fourth icon 2001 is a financial or economic application, the electronic device 101 may identify at least one financial or economic application among a plurality of applications as the recommended application.

In an embodiment, the electronic device 101 may dispose the recommendation icon 2031 in the fifth area 1940 in the designated folder page 330 based on identifying at least one recommended application corresponding to the category of the third icon 2002 and the fourth icon 2001. In an embodiment, the recommendation icon 2031 may include an object (e.g., the '+' symbol) for adding a recommendation icon.

In an embodiment, if at least one recommended application corresponding to the category of the third icon 2002 and the fourth icon 2001 is identified, the electronic device 101 may dispose a widget 2020 corresponding to the category or a widget 2020 (or a recommended widget) corresponding to at least one recommended application on the designated folder page 330. In an embodiment, the recommended widget 2020 may include an object 2040 (e.g., the '+' symbol) for adding a recommended widget, and the recommended widget 2020 may be disposed in a different area from the fifth area 1940 in the designated folder page 330.

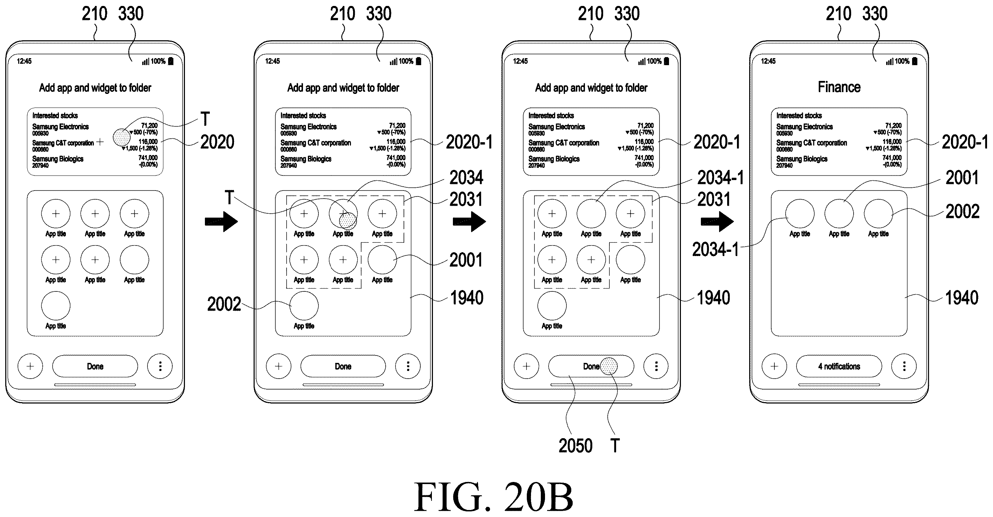

FIG. 20B illustrates an example of an operation of generating a designated folder page 330 according to an embodiment of the disclosure.

Referring to FIG. 20B, the electronic device 101 may change the designated folder page 330 based on the user's touch input.

The electronic device 101 according to an embodiment may add the recommended widget 2020 to the designated folder page 330 based on the user's touch input T to the recommended widget 2020. In an embodiment, based on identifying the user's touch input T for adding the recommended widget 2020, the electronic device 101 may dispose the added widget 2020-1 corresponding to the recommended widget 2020 in the designated folder page 330. In an embodiment, the transparency of the recommended widget 2020 and the transparency of the added widget 2020-1 may be different from each other.

The electronic device 101 according to an embodiment may add a recommendation icon 2034 in response to the user's touch input to the designated folder page 330 based on the user's touch input T to any one of the recommendation icons 2031 disposed in the fifth area 1940. In an embodiment, the electronic device 101 may dispose an added icon 2034-1 corresponding to the recommendation icon 2034 in the designated folder page 330.In an embodiment, the transparency of the recommendation icon 2034 and the transparency of the added icon 2034-1 may be different from each other.

The designated folder page 330 according to an embodiment may include a sixth area 2050 in which an object (or an object for change termination) (e.g., a button) corresponding to the change termination of the designated folder page 330 is disposed. In an embodiment, the electronic device 101 may dispose the sixth area 2050 in which the object corresponding to the change termination of the folder page 330 may be disposed at a preset position in the designated folder page 330.

The electronic device 101 according to an embodiment may terminate the change procedure of the designated folder page 330 and change the display of at least one object in the designated folder page 330 based on the user's touch input T to the object corresponding to the change termination of the designated folder page 330.

In an embodiment, the electronic device 101 may dispose the title corresponding to (or related to) the category of the third icon 2002 and the fourth icon 2001 based on the user's touch input T to the object corresponding to the change termination of the designated folder page 330. For example, based on identifying that the category of the third icon 2002 and the fourth icon 2001 is related to finance or economy, the electronic device 101 may dispose a title related to finance or economy at a preset position in the designated folder page 330.

In an embodiment, the electronic device 101 may dispose the third icon 2002, the fourth icon 2001, and the added icon 2034-1 in the fifth area 1940 based on the user's touch input T to the object corresponding to the change termination of the designated folder page 330. In an embodiment, as illustrated in FIG. 20B, during the change termination of the designated folder page 330, the arrangement positions of icons may be changed and rearranged.

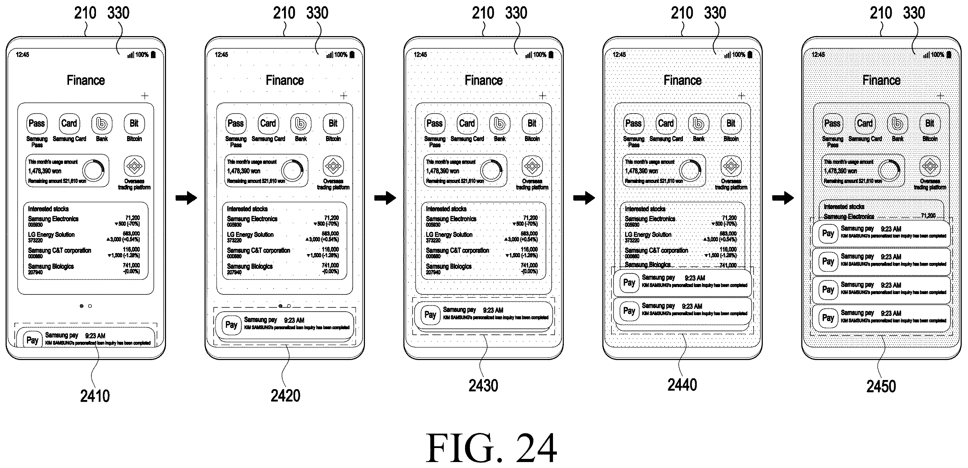

In an embodiment, the electronic device 101 may dispose the object corresponding to notification information in the sixth area 2050 based on the user's touch input T to the object corresponding to the change termination of the designated folder page 330. In an embodiment, the notification information may include a notification corresponding to the application corresponding to at least one icon or widget included in the designated folder page 330. This is described in detail with reference to FIGS. 24, 25A to 25E, and 27A to 27E.

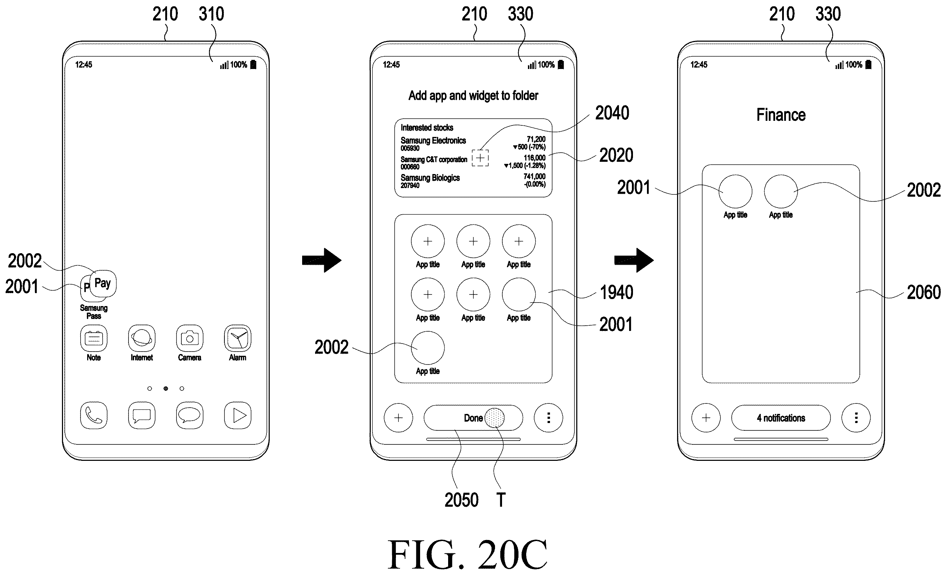

FIG. 20C illustrates an example of an operation of generating a designated folder page 330 according to an embodiment of the disclosure.

Referring to FIG. 20C, the electronic device 101 according to an embodiment may generate a designated folder page 330 including the third icon 2002 and the fourth icon 2001 in response to the user's touch input T for allowing the third icon 2002 to overlap the fourth icon 2001.

In an embodiment, at least one of icons or widgets corresponding to at least one recommended application may be disposed together with the third icon 2002 and the fourth icon 2001 in the designated folder page 330. In an embodiment, the at least one recommended application may correspond to the category of the third icon 2002 and the fourth icon 2001. For example, when the third icon 2002 and the fourth icon 2001 are financial-related icons, the electronic device 101 may identify at least one financial-related application among the plurality of applications as the recommended application.

In an embodiment, the electronic device 101 may dispose an icon and/or widget corresponding to each of the at least one recommended application in the designated folder page 330 based on the identification of at least one recommended application corresponding to the category of the third icon 2002 and the fourth icon 2001. In an embodiment, the icon and widget corresponding to each of the at least one recommended application may include an object 2040 for indicating that the recommended application is the recommended application.

The electronic device 101 according to an embodiment may change the display of at least one object in the designated folder page 330 based on the user's touch input T to the object corresponding to the change termination of the designated folder page 330.

In an embodiment, the electronic device 101 may dispose a title corresponding to the category of the third icon 2002 and the fourth icon 2001 based on the user's touch input T to the object corresponding to the change termination of the designated folder page 330.

In an embodiment, the electronic device 101 may dispose the third icon 2002 and the fourth icon 2001 in the seventh area 2060 in the designated folder page 330 based on the user's touch input T to the object (or an object for change terminating) (e.g., a button) corresponding to the change termination of the designated folder page 330. In an embodiment, based on the user's touch input to the icon or widget corresponding to the recommended application being not identified, the electronic device 101 may change the display of the designated folder page 330 so that the icon or widget corresponding to the recommended application is not displayed.

In an embodiment, the electronic device 101 may dispose the object corresponding to notification information in the sixth area 2050 based on the user's touch input T to the object corresponding to the change termination of the designated folder page 330. In an embodiment, the notification information may include a notification corresponding to the application corresponding to at least one icon or widget included in the designated folder page 330. This is described in detail with reference to FIGS. 24, 25A to 25E, and 27A to 27E.

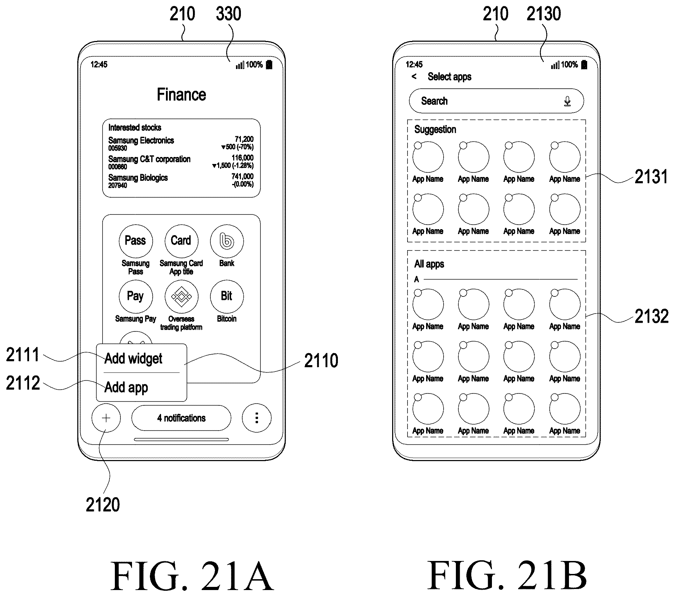

FIGS. 21A to 21C illustrate an example of an operation of updating a designated folder page 330 according to an embodiment of the disclosure.

Referring to FIGS. 21A to 21C, the electronic device 101 according to an embodiment may display the designated folder page 330 in which the object corresponding to the addition of at least one of a widget or icon in the designated folder page 330 is disposed through the display 210. In an embodiment, the electronic device 101 may dispose the object corresponding to the addition of at least one widget or at least one icon in the designated folder page 330 in the area 2120 in the designated folder page 330.

The electronic device 101 according to an embodiment may display the designated folder page 330 in which the object corresponding to the type of object added to the designated folder page 330 is disposed in response to the user's touch input T to the area 2120 in the designated folder page 330. In an embodiment, the electronic device 101 may display an object 2111 corresponding to the addition of a widget in the designated folder page 330 and an object 2112 corresponding to the addition of an icon in the designated folder page 330 in the area 2110 in the designated folder page 330 in response to the user's touch input T (see FIG. 20B) to the area 2120 included in the designated folder page 330.

For example, as illustrated in FIG. 21A, the object 2111 corresponding to the addition of the widget may be positioned relatively at the upper end of the area 2110, and the object 2112 corresponding to the addition of the icon may be positioned relatively at the lower end of the area 2110. However, without limitations thereto, and for example, the object 2111 corresponding to the addition of the widget may be positioned relatively at the lower end in the area 2110, and the object 2112 corresponding to the addition of the icon may be positioned relatively at the upper end in the area 2110.

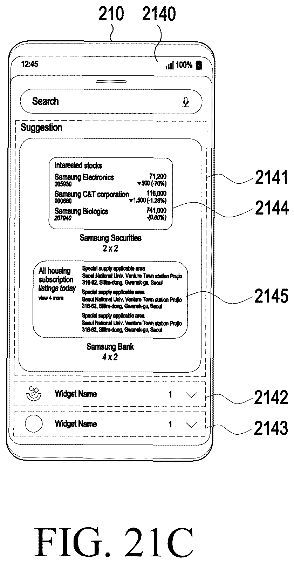

In response to the user's touch input T to the area 2110 in the designated folder page 330, the electronic device 101 according to an embodiment of the disclosure may display either a page 2130 corresponding to the addition of an icon as illustrated in FIG. 21B or a page 2140 corresponding to the addition of a widget as illustrated in FIG. 21C on the display 210.

In an embodiment, the electronic device 101 may display a page 2130 corresponding to the addition of an icon as illustrated in FIG. 21, in response to the user's touch input to the object 2112 corresponding to the addition of an icon in the designated folder page 330. In an embodiment, based on identifying the category of at least one icon or widget included in the designated folder page 330, the electronic device 101 may identify at least one recommended application corresponding to the identified category. In an embodiment, the electronic device 101 may dispose an icon corresponding to at least one recommended application in the area 2131 included in the page 2130 corresponding to the addition of the icon.

In an embodiment, the electronic device 101 may dispose an icon corresponding to at least one application corresponding to the electronic device in the area 2132 included in the page 2130 corresponding to the addition of the icon. For example, at least one application corresponding to the icon included in the area 2132 included in the page 2130 corresponding to the addition of the icon may be an application stored in the electronic device 101, but the disclosure is not limited thereto.

In an embodiment, the electronic device 101 may display a page 2140 corresponding to the addition of a widget, as illustrated in FIG. 21C, in response to the user's touch input to the object 2111 corresponding to the addition of the widget in the designated folder page 330. In an embodiment, based on identifying the category of at least one icon or widget included in the designated folder page 330, the electronic device 101 may identify at least one recommended application corresponding to the identified category. In an embodiment, the electronic device 101 may dispose widgets 2144 and 2145 corresponding to at least one recommended application in the area 2141 included in the page 2140 corresponding to the addition of the widget.

In an embodiment, the electronic device 101 may display information about the widget corresponding to at least one application stored in the electronic device 101 in the areas 2142 and 2143 included in the page 2140 corresponding to the addition of the widget. In an embodiment, the information about the widget may include a title of the widget and an icon corresponding to the widget. In an embodiment, the areas 2142 and 2143 in which the information about the widget is disposed may be different from the area 2141. In an embodiment, the areas 2142 and 2143 in which the information about the widget is disposed may be disposed relatively at the lower end of the page 2140 corresponding to the addition of the widget, but the disclosure is not limited thereto, and the areas 2142 and 2143 in which the information about the widget is disposed may be disposed relatively at the upper end of the page 2140 corresponding to the addition of the widget.

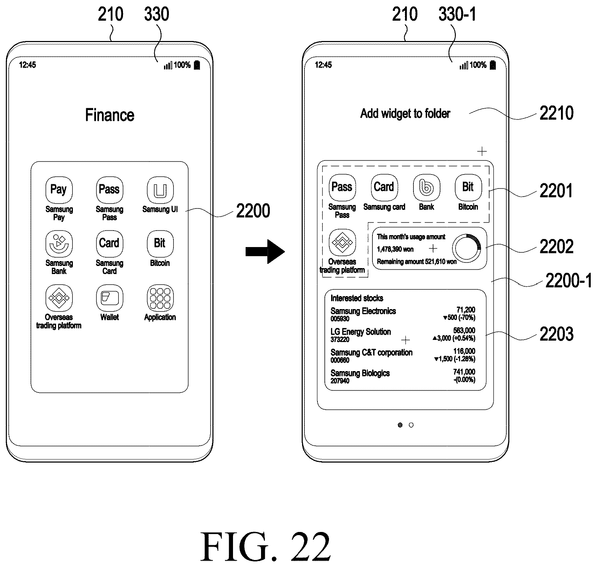

FIG. 22 illustrates an example of an operation of displaying a designated folder page 330 according to an embodiment of the disclosure.

Referring to FIG. 22, the electronic device 101 according to an embodiment may display a folder page 330-1 corresponding to a first event on the display 210 when a folder page is requested after the first event occurs. In an embodiment, the first event may be a restoration event of backup data executed in the electronic device 101. In an embodiment, the folder page 330-1 corresponding to the first event may be a folder page 330-1 displayed instead of the designated folder page 330 when a first user input for displaying the designated folder page 330 is received after the first event occurs.

The electronic device 101 according to an embodiment may display the folder page 330-1 corresponding to the first event based on the identification of a user input corresponding to the display of the designated folder page 330 and the identification of the first event. For example, the first event is assumed to be a case where the restoration event for backup data corresponding to the electronic device 101 occurs. When a user input for displaying the designated folder page 330 is first received, the electronic device 101 may display the folder page 330-1 corresponding to the first event through the display 210.

In an embodiment, the folder page 330-1 may include at least one of a title 2210, an area 2200-1, at least one icon 2201, and widgets 2202 and 2203 corresponding to at least one recommended application. In an embodiment, the widgets 2202 and 2203 (e.g., the widgets 2144 and 2145 illustrated in FIG. 21C) corresponding to at least one recommended application may be widgets related to the category corresponding to the designated folder page 330. In an embodiment, the title 2210 may include information guiding the addition of widgets to the folder page 330-1. In an embodiment, the at least one icon 2201 may be at least a portion of icons included in the designated folder page 330 before the first event occurs. In an embodiment, at least one icon 2201 and widgets 2202 and 2203 corresponding to the at least one recommended application may be disposed in the area 2200-1 of the folder page 330-1.

The widgets 2202 and 2203 corresponding to the at least one recommended application according to an embodiment may include an object 2040 (see FIG. 20A) for identifying that the widget is a widget corresponding to the recommended application. In an embodiment, the transparency corresponding to the widgets 2202 and 2203 corresponding to the at least one recommended application may be different from the transparency corresponding to the at least one icon 2201.

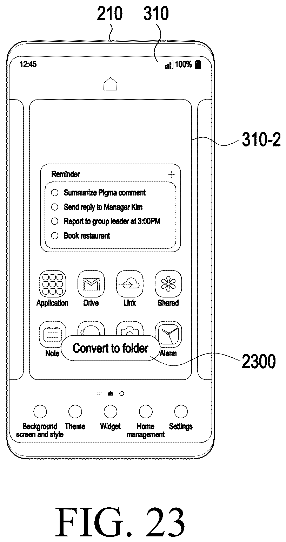

FIG. 23 illustrates an example of an operation of swapping a page of a home screen 210 to a designated folder page 330 according to an embodiment of the disclosure.

Referring to FIG. 23, the electronic device 101 according to an embodiment may obtain a first input corresponding to the page 310-2 of the home screen. In an embodiment, the first input corresponding to the page 310-2 of the home screen may be a user touch input (e.g., a hold input on the page 310-2 of the home screen) for modifying the page 310-2 of the home screen.

In an embodiment, the electronic device 101 may display at least one object (e.g., an icon or a widget) included in the page 310-2 of the home screen. In an embodiment, the size of the at least one object included in the page 310-2 of the home screen may be set to a size in which the object corresponding to the home screen 310 is enlarged or reduced at a designated magnification.

The electronic device 101 according to an embodiment may dispose an object 2300 (e.g., a button) corresponding to swapping to the designated folder page 330 of the page of the home screen 210 in a specific area in the page 310-2 of the home screen 210. In an embodiment, the electronic device 101 may display the object 2300 corresponding to swapping to the designated folder page 330 of the page 310-2 of the home screen 210 on a higher layer than the page 310-2 of the home screen 210.

The electronic device 101 according to an embodiment may swap the page 310-2 of the home screen 210 to the designated folder page 330 based on identifying the user's touch input T to the object 2300 disposed in the area in the page 310-2 of the home screen 210. In an embodiment, the electronic device 101 may add an icon corresponding to the designated folder page 330 to the home screen 310 based on identifying the user's touch input T to the object 2300 disposed in the area in the page 310-2 of the home screen 210. Alternatively, in an embodiment, the electronic device 101 may add a widget corresponding to the designated folder page 330 to the home screen 310 based on identifying the user's touch input T to the object.

FIG. 24 illustrates an example of an operation of displaying a notification according to an embodiment of the disclosure.

Referring to FIG. 24, the electronic device 101 according to an embodiment may display a notification related to the designated folder page 330 on the display 210. In an embodiment, the notification related to the designated folder page 330 may be a notification related to at least one application corresponding to at least one object included in the designated folder page 330. For example, the notification related to the designated folder page 330 may include first notification information related to the application corresponding to the first icon included in the designated folder page 330 and second notification information related to the application corresponding to the second icon included in the designated folder page 330.

The electronic device 101 according to an embodiment may display a notification on the areas 2410, 2420, 2430, 2440, and 2450 in the designated folder page 330. In an embodiment, the areas 2410, 2420, 2430, 2440, and 2450 corresponding to the notification in the designated folder page 330 may be changed in response to the passage of time based on identifying the user's swipe-up input corresponding to the designated folder page 330.

For example, the electronic device 101 may extend and display the areas 2410, 2420, 2430, 2440, and 2450 corresponding to the notification in the designated folder page 330 in response to the passage of time based on identifying the user's swipe-up input corresponding to the designated folder page 330. FIG. 24 illustrates a portion of an operation of extending, over time, areas 2410, 2420, 2430, 2440, and 2450 corresponding to a notification. The areas 2410, 2420, 2430, 2440, and 2450 corresponding to the notification may be continuously extended in response to the passage of time.

The electronic device 101 according to an embodiment may display at least a portion of the notification in the areas 2410, 2420, 2430, 2440, and 2450 in the designated folder page 330 based on the sizes of the areas 2410, 2420, 2430, 2440, and 2450 in the designated folder page 330. In an embodiment, the electronic device 101 may identify at least a portion of the notification corresponding to the sizes of the areas 2410, 2420, 2430, 2440, and 2450 in the designated folder page 330, and display the identified at least portion of the notification in the areas 2410, 2420, 2430, 2440, and 2450 in the designated folder page 330.

In an embodiment, an area except for the areas 2410, 2420, 2430, 2440, and 2450 in the designated folder page 330 may be a blurred area (or an area to which a blur effect is applied). The blur effect refers to an operation of calculating the value of a pixel of an image as an average of the values of other pixels adjacent to the pixel, and the blurred area means an area to which the blur effect is applied. In an embodiment, the electronic device 101 may apply a blur effect to the object corresponding to an area other than the areas 2410, 2420, 2430, 2440, and 2450 in which the notification is displayed in the designated folder page 330 based on identifying the user's swipe-up input corresponding to the designated folder page 330, and display the object to which the blur effect is applied. In an embodiment, the electronic device 101 may display an object to which different blur effects are applied in the designated folder page 330 according to the lapse of time, based on identifying the user's swipe-up input corresponding to the designated folder page 330. In an embodiment, as an area in which a notification is displayed increases, opacity due to the blur effect may increase.

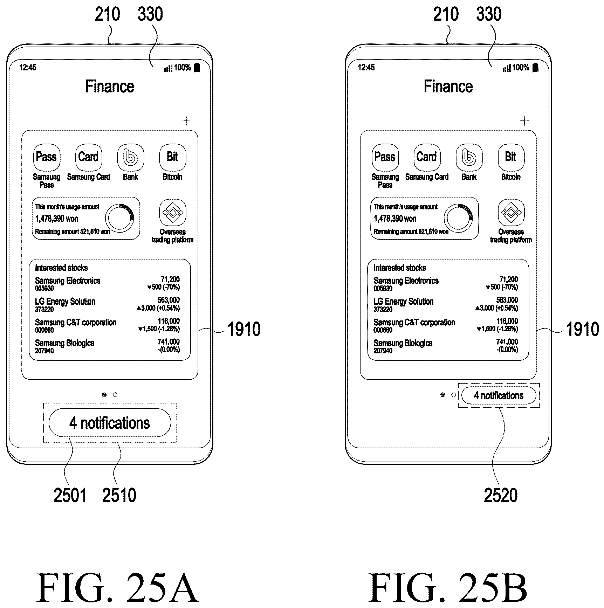

FIGS. 25A to 25E illustrate an example of an operation of displaying an object 2501 corresponding to a notification according to an embodiment of the disclosure.

Referring to FIG. 25A, the electronic device 101 according to an embodiment may display an object 2501 corresponding to the notification on an area 2510 in the designated folder page 330 through the display 210. In an embodiment, the object 2501 corresponding to the notification may include information about the number of notifications corresponding to the notification. For example, based on identifying that the number of notifications corresponding to the icon or application corresponding to the widget included in the designated folder page 330 is 4, the electronic device 101 may display an object 2501 including information about the number of notifications (e.g., four notifications) corresponding to the notification.

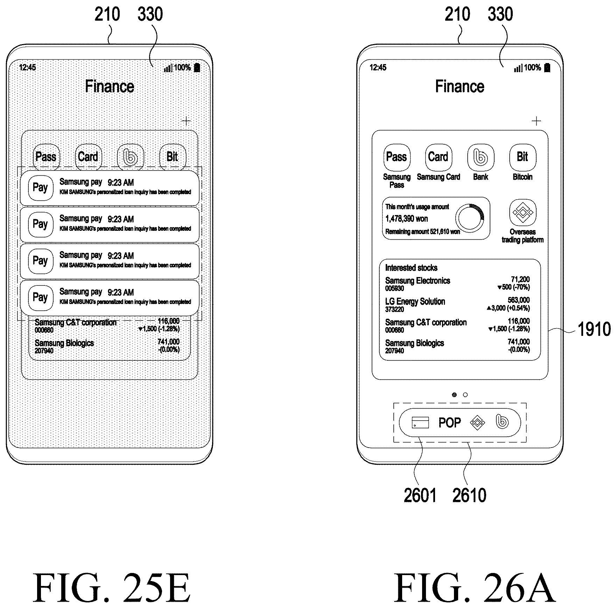

The electronic device 101 according to an embodiment may display an object 2501 corresponding to the notification in the area 2510 corresponding to a relatively lower side of the fourth area 1910 in the designated folder page 330. The electronic device 101 according to an embodiment may display the notification in the folder page 330 or swap to a new page to display the notification based on the user's touch input T corresponding to the object 2501 corresponding to the notification as illustrated in FIG. 25E. In an embodiment, among the areas corresponding to the designated folder page 330, the area except for the area corresponding to the notification may be an area to which the blur effect is applied.

Referring to FIG. 25B, the electronic device 101 according to an embodiment may display the object 2501 corresponding to the notification in the area 2520 corresponding to a relatively lower side of the fourth area 1910 in the designated folder page 330. In an embodiment, the area 2520 in the designated folder page 330 may be an area different from the area 2510 in the designated folder page 330 illustrated in FIG. 25A.

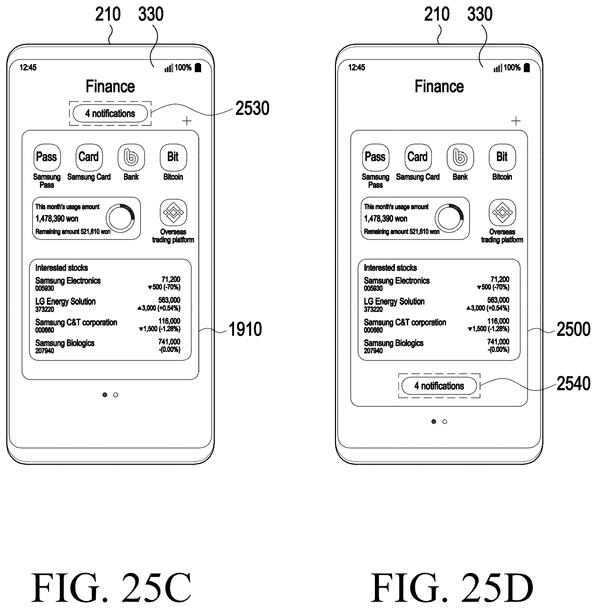

Referring to FIG. 25C, the electronic device 101 according to an embodiment may display the object 2501 corresponding to the notification in an area 2530 corresponding to a relatively upper side of the fourth area 1910 in the designated folder page 330.

Referring to FIG. 25D, the electronic device 101 according to an embodiment may display the object 2501 corresponding to the notification in the area 2540 in the designated folder page 330 through the display 210. In an embodiment, the area 2540 in the designated folder page 330 may be an area included in the eighth area 2500 including the icon or widget corresponding to the designated folder page 330.

FIGS. 26A to 26E illustrate an example of an operation of displaying an object 2601 corresponding to a notification according to an embodiment of the disclosure.

Referring to FIG. 26A, the electronic device 101 according to an embodiment may display an object 2601 corresponding to the notification in the area 2510 in the designated folder page 330 through the display 210. In an embodiment, the object 2601 corresponding to the notification may include information about the application corresponding to the notification. In an embodiment, the information about the application corresponding to the notification application may include an object (e.g., an identifier (e.g., text or image) corresponding to the icon) corresponding to an application having a notification among at least one application corresponding to the designated folder page 330.

For example, based on identifying the plurality of applications (first application, second application, third application, and fourth application) corresponding to the notification among applications corresponding to the designated folder page 330, the electronic device 101 may display the object 2601 including the object corresponding to each of the plurality of applications (first application, second application, third application, and fourth application) corresponding to the notification.

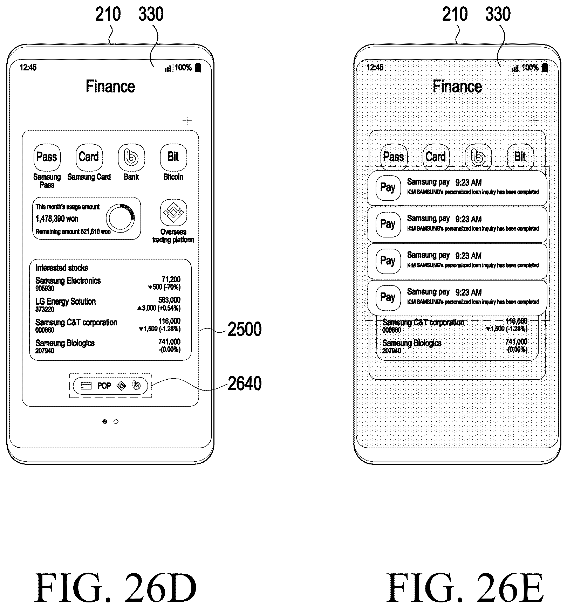

The electronic device 101 according to an embodiment may display an object 2601 corresponding to the notification in the area 2610 corresponding to a relatively lower side of the fourth area 1910 in the designated folder page 330. The electronic device 101 according to an embodiment may display the notification in the folder page 330 as illustrated in FIG. 26E based on the user's touch input T corresponding to the object 2601 corresponding to the notification. In an embodiment, among the areas corresponding to the designated folder page 330, the area except for the area corresponding to the notification may be an area to which the blur effect is applied.

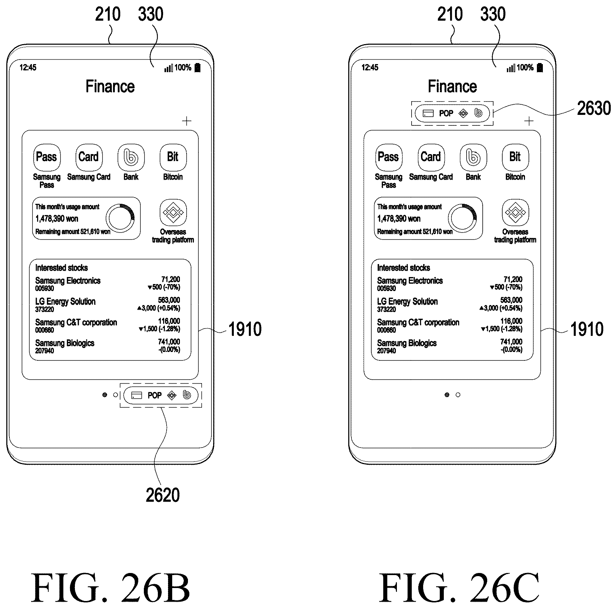

Referring to FIG. 26B, the electronic device 101 according to an embodiment may display the object 2601 corresponding to the notification in the area 2620 corresponding to a relatively lower side of the fourth area 1910 in the designated folder page 330. In an embodiment, the area 2620 in the designated folder page 330 may be an area different from the area 2610 in the designated folder page 330 illustrated in FIG. 26A. In an embodiment, the size of the object 2601 corresponding to the notification displayed on the area 2620 may be smaller than the size of the object 2601 corresponding to the notification displayed on the area 2610.

Referring to FIG. 26C, the electronic device 101 according to an embodiment may display the object 2601 corresponding to the notification in an area 2630 corresponding to a relatively upper side of the fourth area 1910 in the designated folder page 330.

Referring to FIG. 26D, the electronic device 101 according to an embodiment may display the object 2601 corresponding to the notification in the area 2640 in the designated folder page 330 through the display 210.

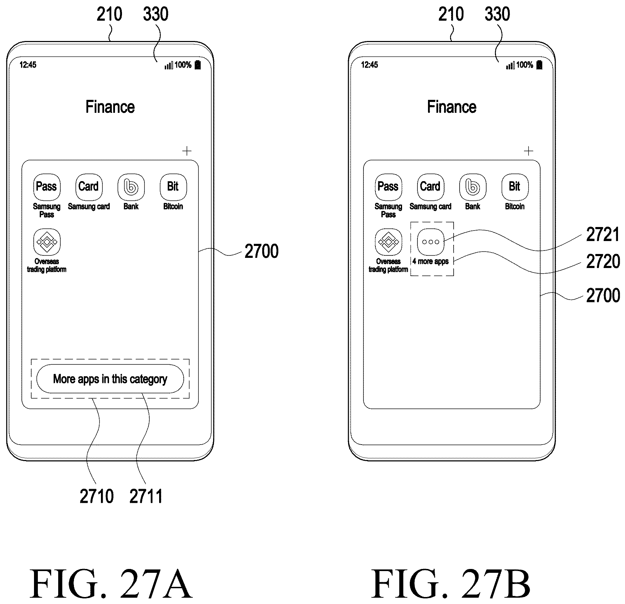

FIGS. 27A to 27E illustrate an example of an operation of displaying objects 2711, 2721 and 2731 corresponding to at least one recommended application according to an embodiment of the disclosure.

Referring to FIG. 27A, the electronic device 101 according to an embodiment may display an object 2711 corresponding to at least one recommended application in the area 2710 in the designated folder page 330 through the display 210. In an embodiment, the area 2710 in the designated folder page 330 may be disposed in the area 2700 in which at least one icon corresponding to the designated folder page 330 is present.

In an embodiment, the object 2711 corresponding to the at least one recommended application may be an application different from at least one application corresponding to at least one icon in the designated folder page 330 among applications related to the designated folder page 330. For example, if the designated folder page 330 is a folder page corresponding to the financial or economic category, at least one recommended application may be an application that is not included in the designated folder page 330 among applications corresponding to the financial or economic category.

In an embodiment, the object 2711 corresponding to the at least one recommended application may include information guiding to identify an application different from the at least one application corresponding to the at least one icon in the designated folder page 330. For example, the object 2711 corresponding to at least one recommended application may include information for indicating that there is an application not included in the designated folder page 330 among the applications corresponding to the financial or economic category.

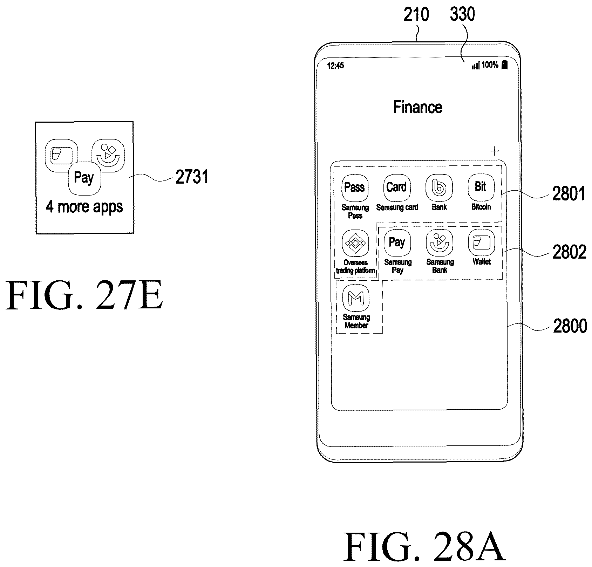

In an embodiment, if a user input corresponding to the selection of the object 2711 is identified, the electronic device 101 may display an icon corresponding to at least one recommended application as illustrated in FIGS. 28A to 28C. This is described below.

Referring to FIG. 27B, the electronic device 101 according to an embodiment may display an object 2721 corresponding to at least one recommended application in the area 2720 in the designated folder page 330 through the display 210. In an embodiment, the area 2720 in the designated folder page 330 may be disposed in the area 2700 in which at least one icon corresponding to the designated folder page 330 is disposed, and the area 2720 in the designated folder page 330 may be a different area from the area 2710. In an embodiment, the size of the object 2721 corresponding to the at least one recommended application may be the same as the size of any one icon in the designated folder page 330, but the disclosure is not limited thereto.

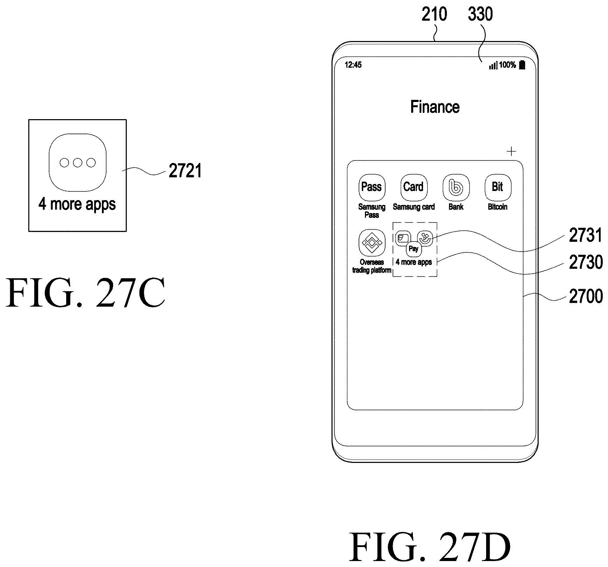

In an embodiment, the object 2721 corresponding to the at least one recommended application may include information about the number of at least one recommended applications corresponding to the category of the designated folder page 330 as illustrated in FIG. 27C.

Referring to FIG. 27D, the electronic device 101 according to an embodiment may display an object 2731 corresponding to at least one recommended application in the area 2730 in the designated folder page 330 through the display 210. In an embodiment, the area 2730 in the designated folder page 330 may be disposed in the area 2700 in which at least one icon corresponding to the designated folder page 330 is disposed, and the area 2730 in the designated folder page 330 may be a different area from the area 2710. In an embodiment, the size of the object 2731 corresponding to the at least one recommended application may be the same as the size of any one icon in the designated folder page 330, but the disclosure is not limited thereto.

In an embodiment, the object 2731 corresponding to the at least one recommended application may include at least one of information about the type or number of at least one recommended application corresponding to the category of the designated folder page 330 as illustrated in FIG. 27E. In an embodiment, the object 2731 corresponding to the at least one recommended application may include at least one icon corresponding to the at least one recommended application. For example, based on the identification of the plurality of recommended applications, the electronic device 101 may identify the object 2731 including the plurality of icons respectively corresponding to the plurality of recommended applications. In an embodiment, the sizes of the plurality of icons may be different from the size of the icon corresponding to the designated folder page 330.

FIGS. 28A to 28C illustrate an example of an operation of displaying an icon 2802 corresponding to at least one recommended application according to an embodiment of the disclosure.

Referring to FIG. 28A, the electronic device 101 according to an embodiment of the disclosure may display at least one icon 2802 (or a recommendation icon) corresponding to at least one recommended application on the designated folder page 330 through the display 210 based on the user's touch input T corresponding to the object 2711, 2721, 2731 (see FIG. 27A) corresponding to at least one recommended application. In an embodiment, based on the user's touch input T corresponding to the object 2711, 2721, 2731, the electronic device 101 may dispose each of the recommendation icon 2802 and at least one icon 2801 (or the existing icon) corresponding to the designated folder page 330 in the area 2800 in the designated folder page 330. In an embodiment, the size of the recommendation icon 2802 may be the same as or different from the size of the existing icon 2801.

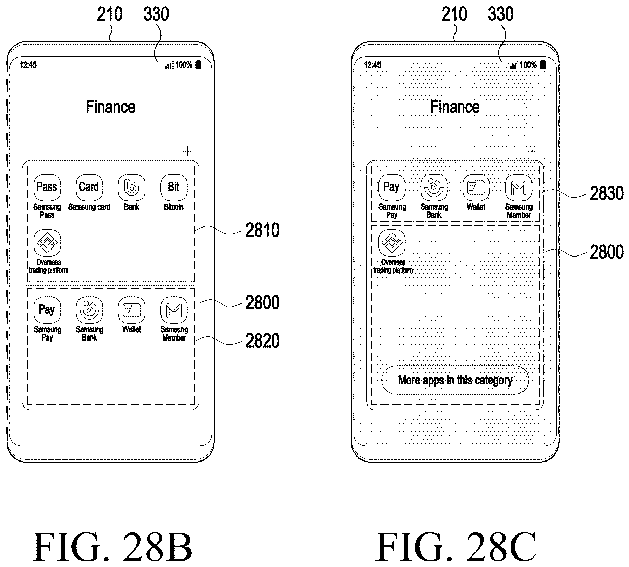

Referring to FIG. 28B, the electronic device 101 according to an embodiment of the disclosure may separate and dispose the recommendation icon 2802 and the existing icon 2801 in different areas in the designated folder page 330.

In an embodiment, based on the user's touch input T corresponding to the object 2711, 2721, 2731, the electronic device 101 may dispose the existing icon 2801 in the area 2810 in the designated folder page 330, and may dispose the recommendation icon 2802 in the area 2820 in the designated folder page 330. According to an example, each of the area 2810 corresponding to the existing icon 2801 and the area 2820 corresponding to the recommendation icon 2802 may be included in the area 2800 in the designated folder page 330.

Referring to FIG. 28C, the electronic device 101 according to an embodiment of the disclosure may display the recommendation icon 2802 on a higher layer than the designated folder page 330. In an embodiment, the electronic device 101 may dispose the recommendation icon 2802 in the area 2830 corresponding to a portion of the area 2800 in the designated folder page 330 based on the user's touch input T corresponding to the object 2711, 2721, 2731.

In an embodiment, as the recommendation icon 2802 and the existing icon 2801 overlap in the designated folder page 330, a blur effect may be applied to the first layer corresponding to the designated folder page 330 before the recommendation icon 2802 is added.

In an embodiment, it is assumed that the recommendation icon 2802 and the existing icon 2801 overlap in the designated folder page 330. In an embodiment, when the second layer corresponding to the recommendation icon 2802 is positioned on a higher layer compared to the first layer corresponding to the existing icon 2801, the second layer corresponding to the at least one icon 2802 may be displayed with a first transparency in the designated folder page 330. In an embodiment, the level of the second transparency may be smaller than the level of the transparency of the folder page 330 illustrated in FIG. 28A, but the disclosure is not limited thereto. In an embodiment, the level of the second transparency may be the same as the level of the transparency of the folder page 330 illustrated in FIG. 28A.

In an embodiment, when the second layer corresponding to the recommendation icon 2802 is positioned at a higher layer compared to the first layer corresponding to the existing icon 2801, the second layer may be displayed with the second transparency, and the first layer may be displayed with a blur effect or the first transparency. In an embodiment, the level of the first transparency may be smaller than the level of the transparency of the folder page 330 illustrated in FIG. 28A.

After at least one icon 2802 corresponding to the at least one recommended application is displayed on the folder page 330, the electronic device 101 according to an embodiment may display, through the display 210, the folder page 330 from which at least one icon 2802 corresponding to the at least one recommended application is removed based on identifying a user input for displaying the folder page 330. For example, if a user input for displaying the folder page 330 is identified after a user input corresponding to the termination of the display of the folder page 330 is identified, the folder page 330 in which at least one icon 2802 corresponding to the at least one recommended application is removed may be displayed.

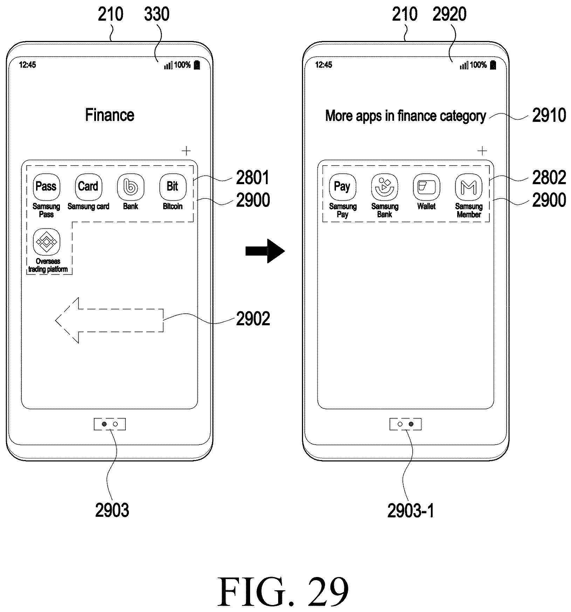

FIG. 29 illustrates an example of an operation of displaying a folder page 2920 corresponding to at least one recommended application according to an embodiment of the disclosure.

Referring to FIG. 29, the electronic device 101 according to an embodiment of the disclosure may display the folder page 2920 corresponding to at least one recommended application through the display 210 based on a user input. In an embodiment, the electronic device 101 may display the folder page 2920 corresponding to at least one recommended application based on identifying a swipe input 2902 in a first direction in the designated folder page 330.

In an embodiment, the folder page 2920 corresponding to the at least one recommended application may include a title 2910, an area 2900, an object 2903-1 corresponding to the order of the plurality of folder pages 330 and 2920, and at least one icon 2802 corresponding to the at least one recommended application. In an embodiment, the title 2910 may include information about the category corresponding to at least one recommended application and guide information indicating that the displayed page is a folder page corresponding to at least one recommended application. In an embodiment, the at least one icon 2802 corresponding to the at least one recommended application may be disposed in the area 2900 in the folder page 2920 corresponding to the at least one recommended application.

In an embodiment, the designated folder page 330 may include an object 2903 corresponding to the order of the plurality of folder pages 330 and 2920. In an embodiment, the object 2903-1 corresponding to the order of the plurality of folder pages 330 and 2920 may be disposed in the area in the folder page 2920 corresponding to the area in which the object 2903 is disposed in the designated folder page 330.

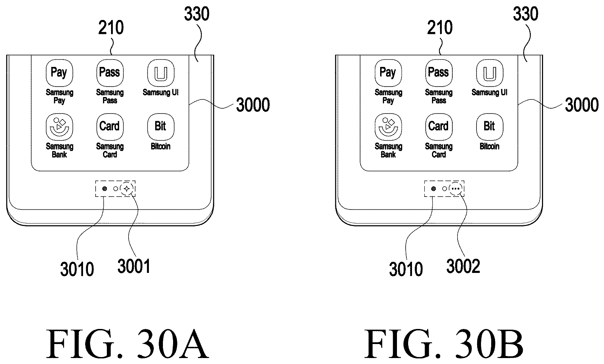

FIGS. 30A and 30B illustrate an example of an operation of displaying an object 3001 and 3002 corresponding to a folder page 2920 corresponding to at least one recommended application according to an embodiment of the disclosure.

Referring to FIGS. 30A and 30B, the electronic device 101 according to an embodiment of the disclosure may display objects 3001 and 3002 corresponding to the folder page 2920 corresponding to at least one recommended application on the designated folder page 330 through the display 210.

In an embodiment, the objects 3001 and 3002 corresponding to the folder page 2920 corresponding to the at least one recommended application may be disposed in the area 3010 in the designated folder page 330. The area 3010 may be disposed relatively at a lower side of the area 3000 in which the icon corresponding to the designated folder page 330 is disposed. In an embodiment, the electronic device 101 may dispose the objects 3001 and 3002 corresponding to the folder page 2920 and the object corresponding to the designated folder page 330 in a first order in the area 3010.

In an embodiment, the at least one object disposed in the area 3010 may include information about the order (or position) of the folder page 2920 corresponding to the at least one recommended application. In an embodiment, the objects 3001 and 3002 corresponding to the folder page 2920 and object corresponding to the designated folder page 330 may have different shapes. For example, based on the identification of two pages corresponding to the designated folder page 330, two objects respectively corresponding to the two identified pages and objects 3001 and 3002 corresponding to the folder page 2920 may be disposed in the area 3010.

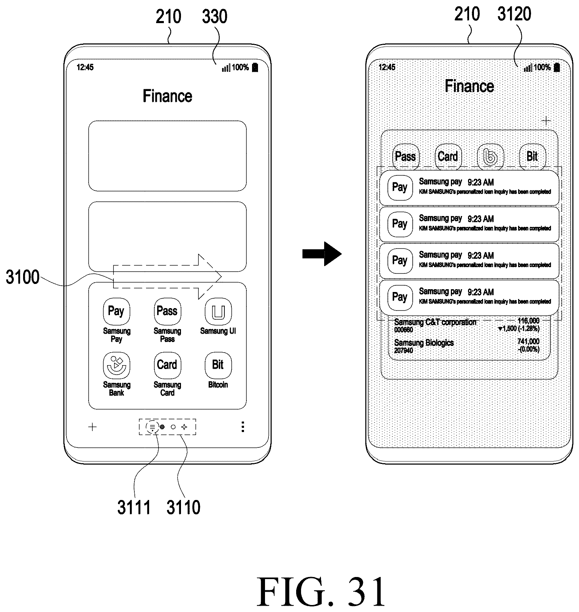

FIG. 31 illustrates an example of an operation of displaying an object 3111 corresponding to a notification according to an embodiment of the disclosure.

Referring to FIG. 31, the electronic device 101 according to an embodiment of the disclosure may display an object 3111 corresponding to the notification corresponding to the designated folder page 330 on the designated folder page 330 through the display 210.

In an embodiment, an object 3111 corresponding to the notification corresponding to the designated folder page 330 may be disposed in the area 3110 in the designated folder page 330. The area 3110 may be disposed relatively at a lower side of the area in which the icon corresponding to the designated folder page 330 is disposed. In an embodiment, the electronic device 101 may dispose the object 3111 corresponding to the notification and the object corresponding to the designated folder page 330 in the area 3110.

In an embodiment, at least one object disposed in the area 3010 may include information about the order (or position) of the object 3111 corresponding to the notification. For example, based on the identification of two pages corresponding to the designated folder page 330 and the folder page 2920 (see FIG. 29) corresponding to the recommended application, the electronic device 101 may dispose two objects respectively corresponding to the identified two pages, the object corresponding to the folder page 2920, and the object 3111 corresponding to the notification in a second order in the area 3110.

In an embodiment, the object 3111 corresponding to the notification and the object corresponding to the designated folder page 330 may have different shapes. In an embodiment, the shapes of the object 3111 corresponding to the notification and the objects 3001 and 3002 (see FIG. 30) corresponding to the folder page 2920 may be different.

The electronic device 101 according to an embodiment may display the notification corresponding to the designated folder page 330 through the display 210 based on a user input. In an embodiment, the electronic device 101 may display the notification corresponding to the designated folder page 330 based on identifying a swipe input 3100 in a second direction in the designated folder page 330. In an embodiment, the electronic device 101 may display the notification in the folder page 330 as illustrated in FIG. 25E. In an embodiment, among the areas corresponding to the designated folder page 330, the area except for the area corresponding to the notification may be an area to which the blur effect is applied.

Technical objects to be achieved herein are not limited to the foregoing technical objects, and other technical objects not mentioned may be clearly understood by those skilled in the art from the following description.

Effects obtainable from the disclosure are not limited to the above-mentioned effects, and other effects not mentioned may be clearly understood by those skilled in the art from the following description.

An electronic device 101 according to an embodiment of the disclosure may comprise a display 210, 160, memory 230, 130 storing instructions, and at least one processor 220, 120. The instructions may cause the electronic device 101 to obtain an input corresponding to a designated object 320 disposed on a home screen 310. The instructions may cause the electronic device 101 to display, on the display 210, 160, a designated folder page 330 in which at least one first widget 340 is disposed, based on the input corresponding to the designated object 320. The designated folder page 330 may be displayed above the home screen 310 displayed on the display 210, 160. The instructions may cause the electronic device 101 to obtain an input corresponding to the at least one first widget 340 included in the designated folder page 330. The instructions may cause the electronic device 101 to identify a property of the designated folder page 330 based on the at least one first widget 340 or at least one icon 350 included in the designated folder page 330. The instructions may cause the electronic device 101 to change at least one of display or arrangement of the at least one first widget 340 based on the property of the designated folder page 330, environment data of the electronic device 101, or user activity data.

In the electronic device 101 according to an embodiment of the disclosure, the instructions may cause the electronic device 101 to obtain an input corresponding to at least one second widget 410 disposed on the home screen 310 or a page of the home screen 310, and move or copy the at least one second widget 410 to the designated folder page 330 based on the input corresponding to the at least one second widget 410.

In the electronic device 101 according to an embodiment of the disclosure, the instructions may cause the electronic device 101 to identify at least one folder page including the designated folder page 330 based on a property of the at least one second widget 410.The instructions may cause the electronic device 101 to display, on the display 210, 160, a notification 510 related to the at least one folder page based on the input corresponding to the at least one second widget 410. The notification 510 may include at least one selection button corresponding to the at least one folder page.

In the electronic device 101 according to an embodiment of the disclosure, the instructions may cause the electronic device 101 to obtain an input corresponding to the home screen 310 or a page of the home screen 310 on which at least one second widget 410 is disposed, and generate the designated object 320 corresponding to the home screen 310 or the page of the home screen 310 based on the input corresponding to the home screen 310 or the page of the home screen 310.

In the electronic device 101 according to an embodiment of the disclosure, the instructions may cause the electronic device 101 to generate a page of the home screen 310 corresponding to the designated folder page 330 in which the at least one first widget 340 is disposed, based on the input corresponding to the designated folder page 330.

In the electronic device 101 according to an embodiment of the disclosure, the instructions may cause the electronic device 101 to change at least one of display or arrangement of the at least one first widget 340 based on the property of the designated folder page 330, as at least part of changing at least one of the display or arrangement of the at least one first widget 340.

In the electronic device 101 according to an embodiment of the disclosure, the instructions may cause the electronic device 101 to identify a property of the designated folder page 330 based on a property of the at least one first widget 340 or a property of the at least one icon 350, as at least part of identifying the property of the designated folder page 330.The instructions may cause the electronic device 101 to identify a recommended application or recommended task based on the property of the designated folder page 330, and display, in at least a partial area of the designated folder page 330, an object 1230 corresponding to the identified recommended application or recommended task.

In the electronic device 101 according to an embodiment of the disclosure, the at least one processor 220, 120 may

obtain an input corresponding to a floating object displayed above a content screen displayed on the display 210, 160, the content screen being a screen corresponding to an application or task executed in a foreground, and display the designated folder page 330 on the display 210, 160 based on the input corresponding to the floating object.

In the electronic device 101 according to an embodiment of the disclosure, the at least one processor 220, 120 may

identify a recommended application or recommended task based on an application or task corresponding to the content screen, as at least part of displaying the designated folder page 330 on the display 210, 160, and display, in at least a partial area of the designated folder page 330, an object 1230 corresponding to the identified recommended application or recommended task.

In the electronic device 101 according to an embodiment of the disclosure, the instructions may cause the electronic device 101 to receive a resource related to the designated folder page 330, the resource including text data or image data, identify a recommended application or recommended task corresponding to the designated folder page 330 based on the received resource, and display, in at least a partial area of the designated folder page 330, an object 1230 corresponding to the identified recommended application or recommended task.

A method for operating an electronic device 101 according to an embodiment of the disclosure may comprise obtaining an input corresponding to a designated object 320 disposed on a home screen 310. The method for operating the electronic device 101 according to an embodiment may comprise displaying, on the display 210, 160, a designated folder page 330 in which at least one first widget 340 is disposed, based on the input corresponding to the designated object 320. The designated folder page 330 may be displayed above the home screen 310 displayed on the display 210, 160. The method for operating the electronic device 101 according to an embodiment may comprise obtaining an input corresponding to the at least one first widget 340 included in the designated folder page 330. The method for operating the electronic device 101 according to an embodiment may comprise identifying a property of the designated folder page 330 based on the at least one first widget 340 or at least one icon 350 included in the designated folder page 330. The method for operating the electronic device 101 according to an embodiment may comprise changing at least one of display or arrangement of the at least one first widget 340 based on the property of the designated folder page 330, environment data of the electronic device 101, or user activity data.

The method for operating the electronic device 101 according to an embodiment may comprise obtaining an input corresponding to at least one second widget 410 disposed on the home screen 310 or a page of the home screen 310. The method for operating the electronic device 101 according to an embodiment may comprise moving or copying the at least one second widget 410 to the designated folder page 330 based on the input corresponding to the at least one second widget 410.

The method for operating the electronic device 101 according to an embodiment may comprise identifying at least one page including the designated folder page 330 based on a property of the at least one second widget 410. The method for operating the electronic device 101 according to an embodiment may comprise displaying, on the display 210, 160, a notification 510 related to the at least one folder page based on the input corresponding to the at least one second widget 410. The notification 510 may include at least one selection button corresponding to the at least one folder page.

The method for operating the electronic device 101 according to an embodiment may comprise identifying a property of the designated folder page 330 based on a property of the at least one first widget 340 or a property of the at least one icon 350. The method for operating the electronic device 101 according to an embodiment may comprise identifying a recommended application or recommended task based on the property of the designated folder page 330. The method for operating the electronic device 101 according to an embodiment may comprise displaying, in at least a partial area of the designated folder page 330, an object 1230 corresponding to the identified recommended application or recommended task.

The method for operating the electronic device 101 according to an embodiment may comprise obtaining an input corresponding to a floating object displayed above a content screen displayed on the display 210, 160. The content screen may be a screen corresponding to an application or task executed in a foreground. The method for operating the electronic device 101 according to an embodiment may comprise displaying the designated folder page 330 on the display 210, 160 based on an input corresponding to the floating object. In the method for operating the electronic device 101 according to an embodiment, displaying the designated folder page 330 on the display 210, 160 may include identifying a recommended application or recommended task based on an application or task corresponding to the content screen and displaying, in at least a partial area of the designated folder page 330, an object 1230 corresponding to the identified recommended application or recommended task.

The method for operating the electronic device 101 according to an embodiment may comprise receiving a resource related to the designated folder page 330. The resource may include text data or image data. The method for operating the electronic device 101 according to an embodiment may comprise identifying a recommended application or recommended task corresponding to the designated folder page 330 based on the received resource. The method for operating the electronic device 101 according to an embodiment may comprise displaying, in at least a partial area of the designated folder page 330, an object 1230 corresponding to the identified recommended application or recommended task.

In a storage medium storing computer-readable instructions according to an embodiment of the disclosure, the instructions may, when executed by at least one processor 220, 120 of an electronic device 101, cause the electronic device 101 to obtain an input corresponding to a designated object 320 disposed on a home screen 310.

The instructions according to an embodiment may cause the electronic device 101 to display, on a display 210, 160, a designated folder page 330 in which at least one first widget 340 is disposed, based on the input corresponding to the designated object 320, the designated folder page 330 being displayed above the home screen 310 displayed on the display 210, 160.

The instructions according to an embodiment may cause the electronic device 101 to identify a property of the designated folder page 330 based on the at least one first widget 340 or at least one icon 350 included in the designated folder page 330.

The instructions according to an embodiment may cause the electronic device 101 to change at least one of display or arrangement of the at least one first widget 340 based on the property of the designated folder page 330, environment data of the electronic device 101, or user activity data.

An electronic device 101 according to an embodiment of the disclosure may comprise a display 210, 160, memory 230, 130 storing instructions, and at least one processor 220, 120. The instructions may, when executed by the at least one processor 220, 120, cause the electronic device 101 to obtain a resource received in relation to a designated folder page 330. The resource may include text data or image data. The instructions may cause the electronic device 101 to identify a recommended application or recommended task corresponding to the designated folder page 330 based on the obtained resource. The instructions may cause the electronic device 101 to dispose an object 1230 corresponding to the identified recommended application or recommended task in a first area of the designated folder page 330. The instructions may cause the electronic device 101 to display, on the display 210, 160, the designated folder page 330 based on an input corresponding to a designated object 320 disposed on a home screen 310. The designated folder page 330 may be displayed above the home screen 310 or content screen displayed on the display 210, 160. The instructions may cause the electronic device 101 to object an input corresponding to at least one widget or at least one icon included in the designated folder page 330 or the home screen 310. The instructions may cause the electronic device 101 to dispose the at least one widget or the at least one icon at a specific position or in a specific size in a second area of the designated folder page based on the obtained input corresponding to the at least one widget or the at least one icon.

In the electronic device 101 according to an embodiment, the instructions may cause the electronic device 101 to extract text of at least a portion of the text data or the image data included in the obtained resource and, as at least part of identifying the recommended application or recommended task, identifying the recommended application or recommended task based on the extracted text of the at least portion.

In the electronic device 101 according to an embodiment, the instructions may cause the electronic device 101 to store the obtained resource in the memory 230, 130 corresponding to the designated folder page 330 and dispose a feed icon related to the obtained resource in a third area of the designated folder page 330.

In the electronic device 101 according to an embodiment, the instructions may cause the electronic device 101 to generate a title corresponding to the designated folder page 330 based on the obtained resource, store the generated title in the memory 230, 130 corresponding to the designated folder page 330 and, as at least part of displaying the designated folder page 330 on the display 210, 160, display the title corresponding to the designated page on the display 210, 160.

The electronic device according to an embodiment may be one of various types of electronic devices. The electronic devices may include, for example, a portable communication device (e.g., a smart phone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (210; 160);
memory (230; 130) storing instructions; and
at least one processor (220; 120), wherein the instructions, when executed by the at least one processor (220; 120), cause the electronic device (101) to:
obtain an input corresponding to a designated object (320) disposed on a home screen (310);
display, on the display (210; 160), a designated folder page (330) in which at least one first widget (340) is disposed, based on the input corresponding to the designated object (320), the designated folder page (330) being displayed above the home screen (310) displayed on the display (210; 160);
identify a property of the designated folder page (330) based on the at least one first widget (340) or at least one icon (350) included in the designated folder page (330); and
change at least one of display or arrangement of the at least one first widget (340) based on the property of the designated folder page (330), environment data of the electronic device (101), or user activity data.

2. The electronic device (101) of claim 1, wherein the instructions cause the electronic device (101) to:
obtain an input corresponding to at least one second widget (410) disposed on the home screen (310) or a page of the home screen (310); and
move or copy the at least one second widget (410) to the designated folder page (330) based on the input corresponding to the at least one second widget (410).

3. The electronic device (101) of claim 2, wherein the instructions cause the electronic device (101) to:
identify at least one folder page including the designated folder page (330) based on a property of the at least one second widget (410); and
display, on the display (210; 160), a notification (510) related to the at least one folder page based on the input corresponding to the at least one second widget (410),
wherein the notification (510) includes at least one selection button corresponding to the at least one folder page.

4. The electronic device (101) of any one of claims 1 to 3, wherein the instructions cause the electronic device (101) to:
obtain an input corresponding to the home screen (310) or a page of the home screen (310) on which at least one second widget (410) is disposed; and
generate the designated object (320) corresponding to the home screen (310) or the page of the home screen (310) based on the input corresponding to the home screen (310) or the page of the home screen (310).

5. The electronic device (101) of any one of claims 1 to 4, wherein the instructions cause the electronic device (101) to generate a page of the home screen (310) corresponding to the designated folder page (330) in which the at least one first widget (340) is disposed, based on the input corresponding to the designated folder page (330).

6. The electronic device (101) of any one of claims 1 to 5, wherein the instructions cause the electronic device (101) to change at least one of display or arrangement of the at least one first widget (340) based on the property of the designated folder page (330), as at least part of changing at least one of the display or arrangement of the at least one first widget (340).

7. The electronic device (101) of any one of claims 1 to 6, wherein the instructions cause the electronic device (101) to:
identify a property of the designated folder page (330) based on a property of the at least one first widget (340) or a property of the at least one icon (350), as at least part of identifying the property of the designated folder page (330); and
identify a recommended application or recommended task based on the property of the designated folder page (330), and display, in at least a partial area of the designated folder page (330), an object (1230) corresponding to the identified recommended application or recommended task.

8. The electronic device (101) of any one of claims 1 to 7, wherein the instructions cause the electronic device (101) to:
obtain an input corresponding to a floating object displayed above a content screen displayed on the display (210; 160), the content screen being a screen corresponding to an application or task executed in a foreground; and
display the designated folder page (330) on the display (210; 160) based on the input corresponding to the floating object.

9. The electronic device (101) of claim 8, wherein the instructions cause the electronic device (101) to:
identify a recommended application or recommended task based on an application or task corresponding to the content screen, as at least part of displaying the designated folder page (330) on the display (210; 160); and
display, in at least a partial area of the designated folder page (330), an object (1230) corresponding to the identified recommended application or recommended task.

10. The electronic device (101) of any one of claims 1 to 9, wherein the instructions cause the electronic device (101) to:
receive a resource related to the designated folder page (330), the resource including text data or image data;
identify a recommended application or recommended task corresponding to the designated folder page (330) based on the received resource; and
display, in at least a partial area of the designated folder page (330), an object (1230) corresponding to the identified recommended application or recommended task.

11. A method for operating an electronic device (101), the method comprising:
obtaining an input corresponding to a designated object (320) disposed on a home screen (310);
displaying, on a display (210; 160), a designated folder page (330) in which at least one first widget (340) is disposed, based on the input corresponding to the designated object (320), the designated folder page (330) being displayed above the home screen (310) displayed on the display (210; 160);
identifying a property of the designated folder page (330) based on the at least one first widget (340) or at least one icon (350) included in the designated folder page (330); and
changing at least one of display or arrangement of the at least one first widget (340) based on the property of the designated folder page (330), environment data of the electronic device (101), or user activity data.

12. The method of claim 11, further comprising:
obtaining an input corresponding to at least one second widget (410) disposed on the home screen (310) or a page of the home screen (310); and
moving or copying the at least one second widget (410) to the designated folder page (330) based on the input corresponding to the at least one second widget (410).

13. The method of claim 11 or 12, further comprising:
identifying a property of the designated folder page (330) based on a property of the at least one first widget (340) or a property of the at least one icon (350);
identifying a recommended application or recommended task based on the property of the designated folder page (330); and
displaying, in at least a partial area of the designated folder page (330), an object (1230) corresponding to the identified recommended application or recommended task.

14. An electronic device (101) comprising:
a display (210; 160);
memory (230; 130) storing instructions; and
at least one processor (220; 120), wherein the instructions, when executed by the at least one processor (220; 120), enable the electronic device (101) to:
obtain a resource received in relation to a designated folder page (330), the resource including text data or image data;
identify a recommended application or recommended task corresponding to the designated folder page (330) based on the obtained resource;
dispose, in a first area of the designated folder page (330), an object (1230) corresponding to the identified recommended application or recommended task;
display the designated folder page (330) on the display (210; 160) based on an input corresponding to the designated object (310) disposed on the home screen (310), the designated folder page (330) being displayed above the home screen (310) or a content screen displayed on the display (210; 160);
obtain an input corresponding to at least one widget (340) or at least one icon (350) included in the designated folder page (330) or the home screen (310); and
dispose the at least one widget (340) or the at least one icon (350) at a specific position or in a specific size in a second area of the designated folder page (330) based on the obtained input corresponding to the at least one widget (340) or the at least one icon (350).

15. A storage medium storing computer-readable instructions, the instructions, when executed by at least one processor (220; 120) of an electronic device (101), causing the electronic device (101) to:
obtain an input corresponding to a designated object (320) disposed on a home screen (310);
display, on a display (210; 160), a designated folder page (330) in which at least one first widget (340) is disposed, based on the input corresponding to the designated object (320), the designated folder page (330) being displayed above the home screen (310) displayed on the display (210; 160);
identify a property of the designated folder page (330) based on the at least one first widget (340) or at least one icon (350) included in the designated folder page (330); and
change at least one of display or arrangement of the at least one first widget (340) based on the property of the designated folder page (330), environment data of the electronic device (101), or user activity data.
